# EUROPEAN PATENT SPECIFICATION

(11) **EP 2 621 995 B1**
(45) Date of publication and mention of the grant of the patent: **23.03.2016**
(21) Application number: 11761208.5
(22) Date of filing: 14.09.2011
(51) Int. Cl.: C08G 59/06

(54) **ADVANCED EPOXY RESIN COMPOSITIONS**
KETTENVERLÄNGERTE EPOXYDHARZ ZUSAMMENSETZUNGEN
COMPOSITIONS DE RESINES EPOXY ALLONGÉES

(30) Priority: 30.09.2010 US 388071 P
(43) Date of publication of application: 07.08.2013
(73) Proprietor: Dow Global Technologies LLC, Midland, MI 48674 (US)
(72) Inventor: JIN, Xin, Lake Jackson TX 77566 (US); DRUMRIGHT, Ray E., Midland MI 48640 (US); KAINZ, Bernhard, 77886 Lauf (DE); WHITE, Jerry W., Lake Jackson Texas 77566 (US); HEFNER, Robert, E., Rosharon TX 77583 (US)
(74) Representative: Mauro, Marina Eliana
(86) International application number: PCT/US2011/051482
(87) International publication number: WO 2012/044458

(56) References cited:
- EP-A2- 0 253 405
- GB-A- 1 204 760
- US-A- 4 417 033
- US-A1- 2007 117 938

## Description

### BACKGROUND OF THE INVENTION

### Field of the Invention

The present invention relates to an advancement reaction product prepared from a reaction mixture comprising a cycloaliphatic diglycidyl ether compound produced as a result of an epoxidation reaction. The advancement reaction product of the present invention has been found to be useful in coatings applications, particularly for internal or external protective coatings for cans and other metal packaging coatings.

### Description of Background and Related Art

Epoxy resins are well-known polymers with diverse applications such as metal can coatings, general metal, and marine protective coatings, automotive primer, printed circuit boards, semiconductor encapsulants, adhesives, and aerospace composites. High molecular weight epoxy resins based on bisphenol A are widely used in the coatings industry. High molecular weight epoxy resins can be cured through the terminal epoxy groups and the multiple secondary hydroxyl groups along the backbones to provide good mechanical properties and performance. However, the bisphenol A based high molecular weight epoxy resins have limited flexibility and toughness at room temperature. The toughness deficiency is an issue in certain applications. Significant efforts have been devoted to improve toughness and flexibility of epoxy resins. For example, J. M. Dean et al reported in J. Polym. Sci., Part B: Polym. Phys. 39, 2996, 3010 (2001) that incorporation of block copolymers has been shown to improve toughness of certain epoxy systems. S. R. White et al in Nature 409, 794, 797 (2001) reported that nanocomposites and self-healing epoxy systems represent new approaches to develop tougher epoxies.

WO2009/142901, describes an epoxy resin composition comprising a product mixture and isolation of high purity diglycidyl ether (DGE) therefrom. WO2009/142901 also describes a process for preparing the above epoxy resin product mixture, by reacting (1) a mixture of a cis-1,3-cyclohexanedimethanol, a trans-1,3-cyclohexanedimethanol, a cis 1,4-cyclohexanedimethanol, and a trans-1,4-cyclohexanedimethanol, (2) an epihalohydrin, (3) a basic acting substance, (4) optionally, a solvent, (5) optionally, a catalyst, and (6) optionally, a dehydrating agent.

WO2009/142901 also describes preparing a high purity (>99.0 area %) cyclohexanedimethanol diglycidyl ether that is free of oligomeric components by vacuum distillation. In the process of WO2009/142901, after distillation, the desired high purity cyclohexanedimethanol diglycidyl ether product is separated from the pot residue and available to be used in a subsequent process. A high purity cyclohexanedimethanol diglycidyl ether monomer is used to prepare a substantially linear high molecular weight epoxy resin because any reactive impurities in the monomers can affect the molecular weight and chain architecture of the resulting reaction product of cyclohexanedimethanol diglycidyl ether. The principle of molecular weight control in linear step polymerization is discussed, for example, by George Odian in Principles of Polymerization, 4th edition, incorporated herein by reference.

It is desired to provide a high molecular weight advancement reaction product that comprises a polymerization product of at least one cycloaliphatic diglycidyl ether compound, including cyclohexanedimethanol diglycidyl ether, and shows high elongation at break and high tensile toughness.

### SUMMARY OF THE INVENTION

The present invention provides a solution to the problem of the skilled artisan's inability to manufacture a high molecular weight advancement reaction product based on cycloaliphatic diglycidyl ethers wherein the advancement product has adequate flexibility for handling and using such products. For example, the present invention provides high molecular weight advancement reaction products with a high level of elongation at break and high tensile toughness, which in turn, provides coatings made from such products with improved coating performance in the case of coating deformation during and after a coating process.

One embodiment of the present invention is directed to a composition comprising an advancement reaction product having the following chemical structure, Structure (I): 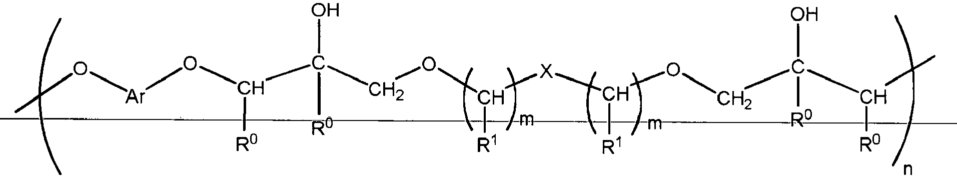 Structure (I) where n is a number from 1 to about 3000; each m independently has a value of 0 or 1; each R⁰ is independently -H or -CH₃; each R¹ is independently -H or a C₁ to C₆ alkylene radical (saturated divalent aliphatic hydrocarbon radical), Ar is a divalent aryl group or heteroarylene group; and X is a cycloalkylene group, including a substituted cycloalkylene group, where the substituent group includes an alkyl, cycloalkyl, an aryl or an aralkyl group or other substituent group, for example, a halogen, a nitro, a blocked isocyanate, or an alkyloxy group; the combination of cycloalkylene and alkylene groups and the combination of alkylene and cycloalkylene group with a bridging moiety in between and wherein the weight average molecular weight of the advancement reaction product is from 5,000 to 1,000,000.

Another embodiment of the present invention is directed to a composition wherein the above advancement reaction product comprises a reaction product of (a) at least one cycloaliphatic diglycidyl ether compound, and (b) at least one aromatic diol compound.

Yet another embodiment of the present invention is directed to a process for preparing the above composition including the step of preparing an advancement reaction product by reacting (a) at least one cycloaliphatic diglycidyl ether compound, and (b) at least one aromatic diol.

The high molecular weight advancement reaction product compositions of the present invention have unusually high flexibility and high toughness at room temperature. The material flexibility and toughness were characterized by stress-strain behavior. Elongation to break, a common parameter to measure the flexibility, and tensile toughness are fundamental mechanical properties of materials. The tensile toughness is a measure of the ability of a material to absorb energy in a tensile deformation. The elongations to break of the advancement reaction products of the present invention are about 80 to over about 1000 times higher than a typical prior known 9-type bisphenol A based advanced epoxy resin. In addition, the tensile toughnesses of the advancement products of the present invention are over about 100 times stronger than a typical prior known 9-type bisphenol A based advanced epoxy resin.

Another embodiment of the present invention is directed to a curable composition comprising (i) the above advancement reaction product of Structure (I); (ii) at least one curing agent; (iii) optionally, at least one curing catalyst; (iv) optionally, at least one solvent and (v) optionally, at least one additive.

Still another embodiment of the present invention is directed to a cured resin prepared by curing the above curable composition.

The cured advancement reaction product composition of the present invention may be advantageously used for preparing coatings. For example, the present invention provides a composition and method for preparing a coating composition having unusually high flexibility and good organic solvent resistance and useful for metal packaging applications. The flexibility of the cured high molecular weight advancement reaction product was demonstrated by Wedge Bend Flexibility measurements and the solvent resistance was characterized by Methyl Ethyl Ketone (MEK) Double Rub test. The Wedge Bend Flexibility results indicate that the cured high molecular weight advancement reaction products of the present invention are more flexible than the commonly known cured bisphenol A based high molecular weight 9-type epoxy resins. In addition, MEK Double Rub Test results illustrate that the cured high molecular weight advancement reaction products of the present invention exhibit similar chemical solvent resistance when compared to a cured bisphenol A based high molecular weight epoxy resin.

### DETAILED DESCRIPTION OF THE INVENTION

The present invention includes a novel composition comprising an advancement reaction polymerization product from (a) a cycloaliphatic diglycidyl ether compound such as a mixture comprising 1,3- and 1,4-cis- and trans- cyclohexanedimethanol diglycidyl ether formed during an epoxidation process and (b) at least one diol such as an aromatic diol including a diphenol such as catechol.

The weight average molecular weight of the advancement reaction product is from 5,000 to 1,000,000.

The advancement reaction product has the following chemical Structure (I): 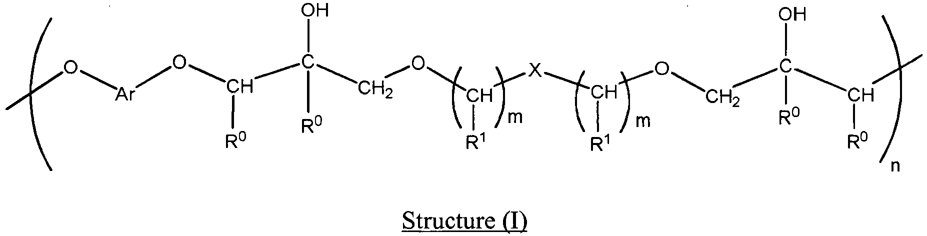 where n is a number from 1 to about 3000; each m independently has a value of 0 or 1; each R⁰ is independently -H or -CH₃; each R¹ is independently -H or a C₁ to C₆ alkylene radical (saturated divalent aliphatic hydrocarbon radical), Ar is a divalent aryl group or heteroarylene group; and X is a cycloalkylene group, including a substituted cycloalkylene group, where the substituent group includes an alkyl, cycloalkyl, an aryl or an aralkyl group or other substituent group, for example, a halogen, a nitro, a blocked isocyanate, or an alkyloxy group; the combination of cycloalkylene and alkylene groups and the combination of alkylene and cycloalkylene group with a bridging moiety in between.

In one embodiment, the average number of repeating units, n, shown in above Structure (I), is generally a number from 2 to 1500, preferably a number from 4 to 1000, more preferably a number from 6 to 500, even more preferably a number from 8 to 100, and most preferably a number from 10 to 50.

As an illustration of one embodiment of the present invention, the preparation of the above high molecular weight advancement reaction products may be illustrated by the following reaction Scheme (I): 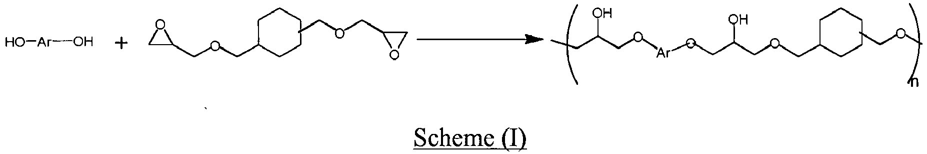 where Ar is a divalent aryl group or heteroarylene group, for example, catechol; and the diepoxide compound may be, for example as shown above, a UNOXOL™ Diol diglycidyl ether (DGE) compound, a mixture comprising 1,3- and 1,4-cis- and trans- cyclohexanedimethanol diglycidyl ether formed during an epoxidation process. [UNOXOL™ cyclic dialcohol is a registered trademark of Union Carbide Corporation.] Although the advancement product illustrated above is a linear chain without branching, it is possible that small amounts of side-reactions may generate branches and/or primary hydroxyl groups along the polymer chains. The substantially linear advancement reaction product is soluble in suitable solvents without apparent gel particles.

As aforementioned, one preferred example of cycloaliphatic diglycidyl ether of the present invention used to build the high molecular weight advancement reaction products of the present invention is UNOXOL™ Diol DGE, which is a product mixture comprising a diglycidyl ether of cis-1,3-cyclohexanedimethanol, a diglycidyl ether of trans-1,3-cyclohexanedimethanol, a diglycidyl ether of cis-1,4-cyclohexanedimethanol, and a diglycidyl ether of trans-1,4-cyclohexanedimethanol. WO2009/142901, describes an epoxy resin composition comprising such a product mixture and the isolation of a high purity DGE therefrom.

Other examples of cycloaliphatic diglycidyl ether used to build the high molecular weight advancement products of the present invention are described herein below.

In general, the aliphatic or cycloaliphatic epoxy resin, Component (a), for use in the advancement reaction of the present invention is prepared by a process (e.g. an epoxidation reaction) comprising reacting (1) an aliphatic or cycloaliphatic hydroxyl-containing material with (2) an epihalohydrin, and (3) a basic acting substance in the presence of (4) a catalyst. The process may optionally comprise (5) a solvent which is substantially inert to reaction with the reactants employed, the intermediates formed and the epoxy resin product produced. The catalyst is preferably a non-Lewis acid catalyst. Said process typically comprises the steps of (a) coupling of the epihalohydrin with the aliphatic or cycloaliphatic hydroxyl-containing material and (b) dehydrohalogenation of the intermediate halohydrin thus formed. The process may be, for example, a phase transfer catalyzed epoxidation process, a slurry epoxidation process, or an anhydrous epoxidation process. A detailed description of the aliphatic or cycloaliphatic epoxy resin and the processes for preparing the same is provided in WO/2009/142901.

Aliphatic or cycloaliphatic hydroxyl-containing materials, component (1) which may be employed in the epoxidation process include for example any one or more of the compounds (A)-(G) listed as follows:

### (A) Cyclohexanedialkanols and Cyclohexenedialkanols

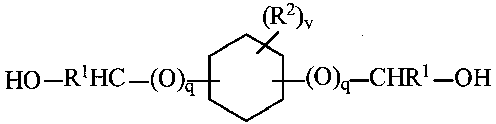

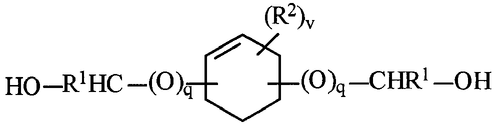

where each R¹ is independently -H or a C₁ to C₆ alkylene radical (saturated divalent aliphatic hydrocarbon radical), each R² is independently a C₁ to C₁₂ alkyl or alkoxy radical, a cycloalkyl or cycloalkoxy radical, or an aromatic ring or inertly substituted aromatic ring; each q independently has a value of 0 or 1; and v has a value of 0 to 2.

Representative preferred examples of the cyclohexanedialkanols and cyclohexenedialkanols include UNOXOL™ Diol (cis-, trans-1,3- and 1,4-cyclohexanedimethanol), cis-, trans-1,2-cyclohexanedimethanol; cis-, trans-1,3-cyclohexanedimethanol; cis-, trans-1,4-cyclohexanedimethanol; a methyl substituted cyclohexanedimethanol, such as, for example, a 4-methyl-1,2-cyclohexanedimethanol or 4-methyl-1,1-cyclohexanedimethanol; 1,1-cyclohexanedimethanol; a cyclohexenedimethanol such as, for example, 3-cyclohexene-1,1-dimethanol; 3-cyclohexene-1,1-dimethanol, 6-methyl-; 4,6-dimethyl-3-cyclohexene-1,1-dimethanol; cyclohex-2-ene-1,1-dimethanol; 1,1-cyclohexanediethanol; 1,4-bis(2-hydroxyethoxy)cyclohexane; 1,4-cyclohexanediethanol; mixtures thereof and the like. Included within this class of epoxy resins are the cyclohexanedioxyalkanols and cyclohexenedioxyalkanols, where at least one q has a value of 1. Specific examples include 1,4-(2-hydroxyethyloxy)cyclohexane and 1,4-(2-hydroxyethyloxy)cyclohex-2-ene. All possible geometric isomers are intended by the formulas and in the aforementioned list, even if the isomers are not explicitly shown or given.

A representative synthesis of 1,1-cyclohexanedimethanol is given by Manea, et al. in "1,1-Cyclohexanedimethanol-a New 1,3-Diol for Increased Stiffness in Polyurethane Elastomers", Paint and Coatings Industry, August 1, 2006, incorporated herein by reference in its entirety. A representative synthesis of 3-cyclohexene-1,1-dimethanol is described in U.S. Patent No. 6,410,807.

UNOXOL™ Diol (cis-, trans-1,3-and 1,4-cyclohexanedimethanol) is a preferred cyclohexanedialkanol. As used herein, the term "cis-, trans-1,3- and -1,4-cyclo hexanedimethylether moiety" means a structure or a blend of chemical structures comprising four geometric isomers, a cis-1,3-cyclohexanedimethylether, a trans-1,3-cyclohexanedimethylether structure, a cis-1,4-cyclohexanedimethylether, and a trans-1,4-cyclohexanedimethylether, within an epoxy resin. The four geometric isomers are shown in the following structures:

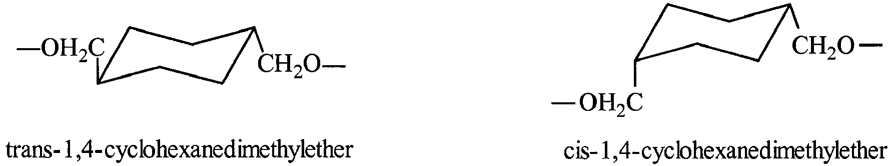

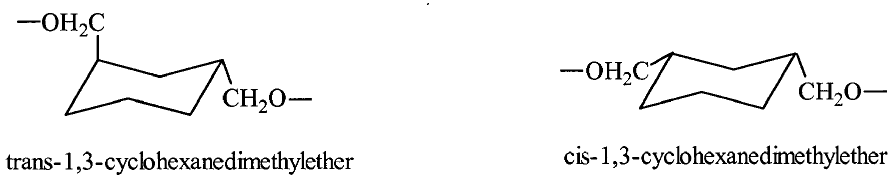

A detailed description of the epoxy resins comprising the cis-, trans-1,3- and 1,4-cyclohexanedimethylether moiety and the processes for preparing the same is provided in aforementioned WO2009/142901. Phase transfer catalyzed epoxidation of aliphatic diols using quaternary ammonium halide catalysts with epichlorohydrin to produce aliphatic epoxy resins with properties that are superior to the corresponding aliphatic epoxy resins produced via Lewis acid catalyzed coupling with epichlorohydrin is described in EP 121260 B1. Included are epoxy resins prepared from cyclohexanedimethanol and dicyclopentadienedimethanol (isomers unspecified).

### (B) Cyclohexanolmonoalkanols and Cyclohexenolmonoalkanols

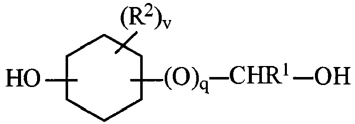

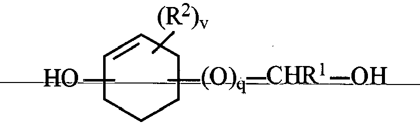

where each R¹, R², q and v are as hereinbefore defined.

Representative examples of the cyclohexanolmonoalkanols and cyclohexenolmonoalkanols which are aliphatic / cycloaliphatic hybrid diol structures containing one cyclohexanol or cyclohexenol moiety and one monoalkanol moiety, such as, for example, a monomethanol moiety, include, for example, 1-(hydroxymethyl)-cyclohexanol, 1-(hydroxymethyl)cyclohex-3-enol, 3-hydroxymethylcyclohexanol, 4-hydroxymethylcyclohexanol, rac-1-isopropyl-4-methyl-2-cyclohexene-1alpha,2alpha-diol; 5beta-isopropyl-2-methyl-3-cyclohexene-1alpha,2alpha-diol; 2-hydroxymethyl-1,3,3-trimethyl-cyclohexanol; cyclohexanol, 1-(2-hydroxyethoxy); mixtures thereof and the like. All possible geometric isomers are intended by the formulas and in the aforementioned list, even if the isomers are not explicitly shown or given.

Another example of such compounds is trans-2-(hydroxymethyl)cyclohexanol prepared by Prins reaction on cyclohexane by Kazunari et al., "Experimental Tests of the Stereoelectronic Effect at Phosphorus: Nucleophilic Reactivity of Phosphite Esters", Journal of the American Chemical Society, 106 , 7831-7835 (1984). A second example is 1-phenyl-cis-2-hydroxymethyl-r-1-cyclohexanol disclosed in U.S. Patent No. 4,125,558. A third example is
trans-4-(hydroxymethyl)cyclohexanol reported by Tamao et al., in Organic Syntheses, Collective Volume 8, p. 315, Annual Volume 69, p. 96.

### (C) Decahydronaphthalenedialkanols, Octahydronaphthalenedialkanols and 1,2,3,4-Tetrahydronaphthalenedialkanols

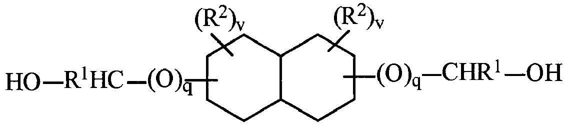

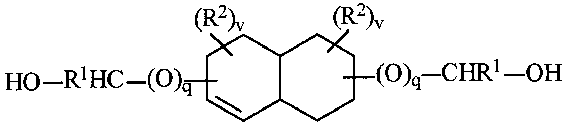

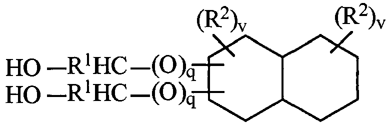

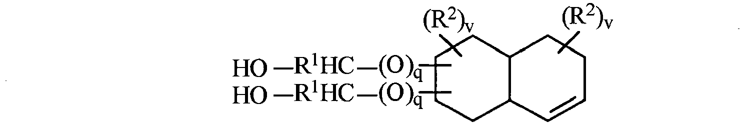

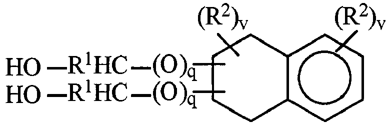

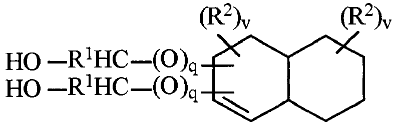

where each R¹, R², q and v are as hereinbefore defined.

Representative examples of the decahydronaphthalenedialkanols, octahydronaphthalenedialkanols and 1,2,3,4-tetrahydronaphthalenedialkanols containing one decahydronaphthalenedialkanol, octahydronaphthalenedialkanol or 1,2,3,4-tetrahydronaphthalenedialkanol moiety, include 1,2-decahydronaphthalenedimethanol; 1,3-decahydronaphthalenedimethanol; 1,4-decahydronaphthalenedimethanol; 1,5-decahydronaphthalenedimethanol; 1,6-decahydronaphthalenedimethanol; 2,7-decahydronaphthalenedimethanol; 1,2,3,4-tetrahydronaphthalenedimethanol (tetralin dimethanol); 1,2-octahydronaphthalenedimethanol; 2,7-octahydronaphthalenedimethanol; 4-methyl-1,2- decahydronaphthalenedimethanol; 4,5-dimethyl-2,7-decahydronaphthalenedimethanol; 1,2-decahydronaphthalenediethanol; 2,7-decahydronaphthalenediethanol; mixtures thereof and the like. All possible geometric isomers are intended by the formulas and in the aforementioned list, even if the isomers are not explicitly shown or given.

While not shown by the structures given above, it is intended that the hybrid diol structures also be included where one monoalkanol moiety is attached to a cycloaliphatic ring and one hydroxyl moiety is directly attached to a cycloaliphatic ring. One example of said hybrid structures would be 1-hydroxy-2-hydroxymethyldecahydronaphthalene.

### (D) Bicyclohexanedialkanols or Bicyclohexanolmonoalkanols

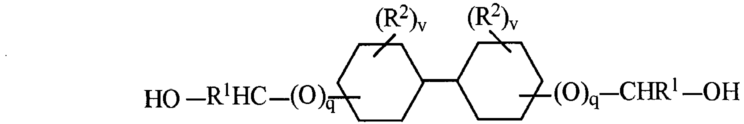

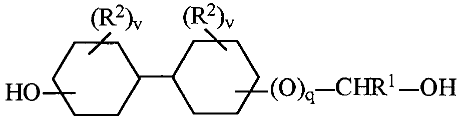

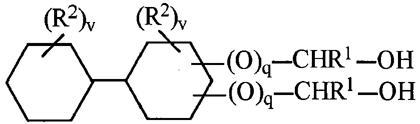

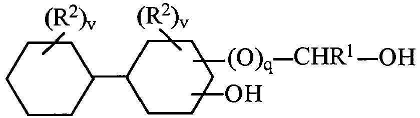

where each R¹, R², q and v are as hereinbefore defined.

Representative examples of the bicyclohexanedialkanols or bicyclohexanolmonoalkanols include bicyclohexane-4,4'-dimethanol; bicyclohexane-1,1'-dimethanol; bicyclohexane-1,2-dimethanol, bicyclohexane-4,4'-diethanol; bicyclohexane-1-hydroxy-1'-hydroxymethyl; bicyclohexane-4-hydroxy-4'-hydroxymethyl; mixtures thereof and the like. All possible geometric isomers are intended by the above formulas and in the aforementioned list, even if the isomers are not explicitly shown or disclosed.

While not shown by the structures given above, it is intended that epoxy resins of bicyclohexenedialkanols or bicyclohexenolmonoalkanols be included where either one or both rings may contain a single unsaturation. One example of said bicyclohexene structures would be the epoxy resin of bicyclohexene-1,1'-dimethanol.

### (E) Bridged Cyclohexanols

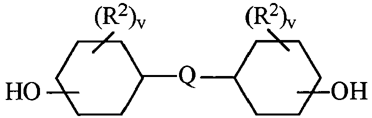

where each Q is a bridging group selecting from a C₁ to C₁₂ alkylene radical (saturated divalent aliphatic hydrocarbon radical), an arylene radical, O, S, O=S=O, S=O, C=O, R³NC=O, where R³ is -H or a C₁ to C₆ alkyl radical (saturated monovalent aliphatic hydrocarbon radical); R² and v are as hereinbefore defined.

Representative examples of the bridged cyclohexanols include the following compounds where the aromatic rings have been hydrogenated to cyclohexane rings: bisphenol A (4,4'-isopropylidenediphenol), bisphenol F (4,4'-dihydroxydiphenylmethane), 4,4'-dihydroxydiphenylsulfone; 4,4'-dihydroxybenzanilide; 1,1'-bis(4-hydroxyphenyl) cyclohexane; 4,4'-dihydroxydiphenyl oxide; 4,4'-dihydroxybenzophenone; 1,1-bis(4-hydroxyphenyl)-1-phenylethane; 4,4'-bis(4(4-hydroxyphenoxy)-phenylsulfone)diphenyl ether; 2,2'-sulfonyldiphenol; 4,4'-thiodiphenol; dicyclopentadiene diphenol.

### (F) Other Cycloaliphatic and Polycycloaliphatic Diols, Monol Monoalkanols, or Dialkanols

Most any cycloaliphatic or polycycloaliphatic diol, monol monoalkanol or dialkanol may be employed in the epoxidation process. Representative examples include the dicyclopentadienedimethanols, the norbornenedimethanols, the norbornanedimethanols, the cyclooctanedimethanols, the cyclooctenedimethanols, the cyclooctadienedimethanols, the pentacyclodecanedimethanols, the bicyclooctanedimethanols, the tricyclodecanedimethanols, the bicycloheptenedimethanols, the cyclobutanedimethanols, the dicyclopentadienediols, the norbornenediols, the norbornanediols, the cyclooctanediols, the cyclooctenediols, the cyclooctadienediols, the cyclohexanediols, the cyclohexenediols, cyclopentane-1,3-diol; bicyclopentane-1,1'-diol; decahydronaphthalene-1,5-diol; trans,trans-2,6-dimethyl-2,6-octadiene-1,8-diol; 5-methylol-5-ethyl-2-(1,1-dimethyl-2-hydroxyethyl)-1,3-dioxane; 3,9-bis(1,1-dimethyl-2-hydroxyethyl)-2,4,8,10-tetraoxaspiro[5.5]undecane; 3-methyl-2,2-norbornanedimethanol; 5-norbornene-2,3-dimethanol; norbornane-2,3-trans-dimethanol; perhydro-1,4:5,8-dimethanonaphthalene-2,3-trans-dimethanol; perhydro-1,4:5,8:9,10-trimethanoanthracene-2,3-trans-dimethanol; and 5-norbornene-2,3-dimethanol; norbornanolmonomethanols; and norbornenols.

Preparation of norbornane-2,3-trans-dimethanol; perhydro-1,4:5,8-dimethanonaphthalene-2,3-trans-dimethanol; and perhydro-1,4:5,8:9,10-trimethanoanthracene-2,3-trans-dimethanol are reported by Wilson et al. in "Polyesters Containing the Norbornane Structure", Journal of Polymer Science: Polymer Chemistry Edition, volume 10, 3191-3204 (1972), incorporated herein by reference. Preparation of 5-norbornene-2,3-dimethanol is reported by Nakamura et al. in " Polyurethanes Containing a New diol Segment. Synthesis of Polyurethanes Containing a Norbornene Moiety and Their Reactions with Thiols", Macromolecules, 23, 3032-3035 (1990).

### (G) Aliphatic Hydroxyl-Containing Materials

Most any aliphatic hydroxyl-containing reactant may be employed in the epoxidation process, either alone, or in mixture with one or more aliphatic or cycloaliphatic hydroxyl-containing materials. Representative of the aliphatic hydroxyl-containing reactants include alkoxylated diphenolic reactants, such as, for example, ethoxylated catechol, ethoxylated resorcinol, ethoxylated hydroquinone, and ethoxylated bisphenol A. Alkoxylation products of the hydrogenated aromatic diphenolic reactants include ethoxylated hydrogenated bisphenol A. Other aliphatic hydroxyl-containing diol reactants include neopentyl glycol, ethylene glycol, propylene glycol, triethylene glycol, higher alkoxylated ethylene glycols, 1,4-butanediol; 1,6-hexanediol; and 1,12-dodecandiol.

Epihalohydrins, component (2), which may be employed in the epoxidation process include, for example, epichlorohydrin, epibromohydrin, epiiodohydrin, methylepichlorohydrin, methylepibromohydrin, methylepiiodohydrin, and any combination thereof. Epichlorohydrin is the preferred epihalohydrin.

The ratio of the epihalohydrin to the aliphatic or cycloaliphatic hydroxyl-containing material is generally from about 1:1 to about 25:1, preferably from about 1.8:1 to about 10:1, and more preferably from about 2:1 to about 5:1 equivalents of epihalohydrin per hydroxyl group in the aliphatic or cycloaliphatic hydroxyl-containing material. The term "hydroxyl group" used herein refers to the hydroxyl groups derived from the aliphatic or cycloaliphatic hydroxyl-containing material. Thus the hydroxyl group differs from a secondary hydroxyl group formed during the process of the forming the halohydrin intermediate to the aliphatic or cycloaliphatic hydroxyl-containing material.

Basic acting substances, component (3), which may be employed in the epoxidation process to include alkali metal hydroxides, alkaline earth metal hydroxides, carbonates, bicarbonates, and any mixture thereof, and the like. More specific examples of the basic acting substance include sodium hydroxide, potassium hydroxide, lithium hydroxide, calcium hydroxide, barium hydroxide, magnesium hydroxide, manganese hydroxide, sodium carbonate, potassium carbonate, lithium carbonate, calcium carbonate, barium carbonate, magnesium carbonate, manganese carbonate, sodium bicarbonate, potassium bicarbonate, magnesium bicarbonate, lithium bicarbonate, calcium bicarbonate, barium bicarbonate, manganese bicarbonate, and any combination thereof. Sodium hydroxide and/or potassium hydroxide are the preferred basic acting substance.

Non-Lewis acid catalysts, component (4), which may be employed in the epoxidation process include, for example, ammonium, phosphonium, or sulfonium salts. More specific examples of the catalyst include salts of the following ammonium, phosphonium and sulfonium cations: benzyltributylammonium, benzyltriethylammonium, benzyltrimethylammonium, tetrabutylammonium, tetraoctylammonium, tetramethylammonium, tetrabutylphosphonium, ethyltriphenylphosphonium, triphenylsulfonium, 4-tert-butoxyphenyldiphenylsulfonium, bis(4-tert-butoxyphenyl)phenylsulfonium, tris(4-tert-butoxyphenyl)sulfonium, 3-tert-butoxyphenyldiphenylsulfonium, bis(3-tert-butoxyphenyl)phenylsulfonium, tris(3-tert-butoxyphenyl)sulfonium, 3,4-di-tert-butoxyphenyldiphenylsulfonium, bis(3,4-di-tert-butoxyphenyl)phenylsulfonium, tris(3,4-di-tert-butoxyphenyl)sulfonium, diphenyl(4-thiophenoxyphenyl)sulfonium, 4-tert-butoxycarbonylmethyloxyphenyldiphenylsulfonium, tris(4-tert-butoxycarbonylmethyloxyphenyl)sulfonium, (4-tert-butoxyphenyl)bis(4-dimethylaminophenyl)sulfonium, tris(4-dimethylaminophenyl)-sulfonium, 2-naphthyldiphenylsulfonium, (4-n-hexyloxy-3,5-dimethylphenyl)-diphenylsulfonium, dimethyl(2-naphthyl)sulfonium, 4-methoxyphenyldimethylsulfonium, trimethylsulfonium, 2-oxocyclohexylcyclohexylmethylsulfonium, trinaphthylsulfonium, tribenzylsulfonium, diphenylmethylsulfonium, dimethylphenylsulfonium, 2-oxo-2-phenylethylthiacyclopentanium, diphenyl-2-thienylsulfonium, 4-n-butoxynaphthyl-1-thiacyclopentanium, 2-n-butoxynaphthyl-1-thiacyclopentanium, 4-methoxynaphthyl-1-thiacyclopentanium, and 2-methoxynaphthyl-1-thiacyclopentanium. Preferred cations are triphenylsulfonium, 4-tert-butylphenyldiphenylsulfonium, 4-tert-butoxyphenyldiphenylsulfonium, tris(4-tert-butylphenyl)sulfonium, tris(4-tert-butoxyphenyl)sulfonium, dimethylphenylsulfonium, and any combination thereof. Suitable quaternary phosphonium catalysts also include, for example, those quaternary phosphonium compounds disclosed in U.S. Patent Nos. 3,948, 855; 3,477,990 and 3,341,580; and Canadian Patent No. 858,648. Benzyltriethylammonium halides are the preferred catalyst, with benzyltriethylammonium chloride being most preferred.

While the amount of catalyst may vary due to factors such as reaction time and reaction temperature, the lowest amount of catalyst to produce the desired effect is preferred. In general, the catalyst may be used in an amount of from 0.5 percent by weight (wt %) to 25 wt %, preferably, from 1 wt %to 18 wt %, and more preferably, from 2 wt % to 12 wt %, based on the total weight of the aliphatic or cycloaliphatic hydroxyl-containing material.

The epihalohydrin may function as both a solvent, component (5), and a reactant in the epoxidation. Alternatively, a solvent other than the epihalohydrin may also be used in the process for preparing the aliphatic or cycloaliphatic epoxy resin (a). The solvent other than the epihalohydrin should be inert to any materials used in the process of preparing the aliphatic or cycloaliphatic epoxy resin (a), including for example, reactants, catalysts, intermediate products formed during the process, and final products. Solvents which may optionally be employed in the epoxidation process include, for example, aliphatic and aromatic hydrocarbons, halogenated aliphatic hydrocarbons, aliphatic ethers, aliphatic nitriles, cyclic ethers, ketones, amides, sulfoxides, tertiary aliphatic alcohols, and any combination thereof.

Particularly preferred solvents, component (5), include pentane, hexane, octane, toluene, xylene, methylethylketone, methylisobutylketone, N,N-dimethylformamide, dimethylsulfoxide, diethyl ether, tetrahydrofuran, 1,4-dioxane, dichloromethane, chloroform, ethylene dichloride, methyl chloroform, ethylene glycol dimethyl ether, N,N-dimethylacetamide, acetonitrile, tertiary-butanol, and any combination thereof.

If the solvent other than the epihalohydrin is employed in the epoxidation process, the minimum amount of solvent to achieve the desired result is preferred. In general, the solvent may be present in the process from 120 wt % to 5 wt %, preferably30 wt % to 100 wt % by weight, and more preferably 50 wt % to 80 wt %, based on the total weight of the aliphatic or cycloaliphatic hydroxyl-containing material. The solvent may be removed from the final product at the completion of the reaction of forming the epoxy resin using conventional methods, such as vacuum distillation.

Epoxy resins of cycloaliphatic or polycycloaliphatic diols may beneficially be employed in a mixture with one or more of the epoxy resins selected from the epoxy resins prepared from aliphatic or cycloaliphatic hydroxyl-containing materials in (A) - (G) above to provide additional advanced high molecular weight epoxy resin compositions of the present invention. Epoxy resins of other kinds of diols, which are not shown in (A) - (G) above, may also beneficially be employed in a mixture comprising one or more of the epoxy resins selected from the epoxy resins of aliphatic or cycloaliphatic hydroxyl-containing materials in (A) - (G) above to provide additional high molecular weight advancement reaction product compositions of the present invention.

Epoxy resins prepared from reaction of aliphatic and cycloaliphatic diols using non-Lewis acid processes typically contain a significant amount of oligomeric product with an epoxide functionality greater than 2. Because of the presence of functionality higher than 2 epoxide groups per molecule, an excess of these oligomers can induce unwanted branching, excessive viscosity, premature crosslinking or gelation. Thus, the epoxy resins used to prepare the compositions of the present invention preferably have an amount of diglycidyl ether component which allows the advancement reaction to progress to completion without the aforementioned problems. Thus, the amount of oligomer content in the epoxy resin is preferably 0 wt % to 10 wt %, more preferably 0 wt % to 5 wt %, more preferably 0 wt % to 4 wt %, more preferably 0 wt % to 3 wt %, more preferably 0 wt % to 2 wt %, more preferably 0 wt % to 1 wt % and most preferably 0 wt % to less than 0.5 wt %, based on the weight of the epoxy resin.

Monoglycidyl monol ethers may also comprise a component of the epoxy resins used to prepare the compositions of the present invention. Because the monoglycidyl ether component generally functions as a chain terminator in the advancement reaction, it is preferably present in an amount which does not hinder the desired extent of molecular weight build and other such properties. Thus, the amount of monoglycidyl ether in the epoxy resin is preferably 0 wt % to 20 wt %, more preferably 0 wt % to 10 wt %, and most preferably 0 wt % to less than 5 wt %, based on the weight of the epoxy resin.

Other minor components may be present as a component of the epoxy resin used to prepare the compositions of the present invention. Generally said minor components may be present in an amount of from 0 wt % to 5 wt %, more preferably 0 wt % to 2 wt % and most preferably 0 wt % to less than 0.5 wt %, based on the weight of the epoxy resin.

The aromatic diol useful as component (b) in the advancement reaction to produce the substantially linear high molecular weight advancement reaction product of the present invention may include aromatic diols having the following general structure, Structure (II):

HO-Ar-OH Structure (II)

wherein Ar is a divalent aryl group or heteroarylene group. The resultant advancement product contains ether linkages and secondary hydroxypropyl backbone groups characteristic of the epoxy resin advancement reaction.

More specifically the aromatic diol compounds useful in the present invention may include any substituted or unsubstituted aryl structures bearing two phenolic hydroxyl groups in any ring position. The aryl structures may comprise for example benzene, substituted benzene and ring-annulated benzene, or the combination of aryl and aliphatic substituted groups. Preferred aromatic diol compounds have the following general structure in Structure (III). 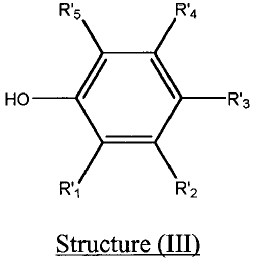 where one and only one of those R'₁-R'₅ is a hydroxyl group; the remaining four substituents among R'₁-R'₅ are independently hydrogen, an alkyl, cycloalkyl, an aryl or an aralkyl group or other substituent, for example, a halogen, a nitro, a blocked isocyanate, or an alkyloxy group; additionally, any two of those remaining R'₁-R'₅ groups may form fused aliphatic or aromatic ring independently.

In another embodiment, the aromatic diol useful in the present invention may comprise, but is not limited to, catechol, a substituted catechol, resorcinol, a substituted resorcinol, hydroquinone, a substituted hydroquinone, any aromatic compound with diphenol structure, and any combination thereof.

In still another embodiment, the aromatic diol useful in the present invention may include any of the dihydric phenols (compounds having two aromatic hydroxyl groups per molecule) illustrated by the following general chemical Formulas III and IV shown in column 7 and column 8 of U.S. Patent No. 5,212,262:

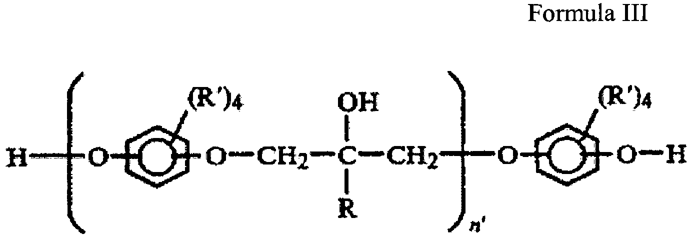

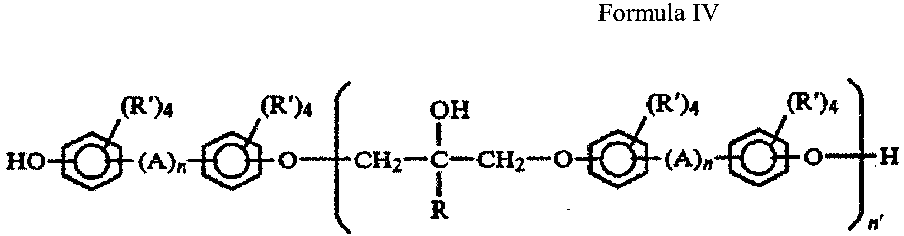

With reference to Formulas III and IV above only, suitable dihydric phenols which can be employed herein to prepare the aforementioned polyepoxides include, for example, those represented by Formulas III or IV above; wherein A is a divalent hydrocarbon group having suitably from 1 to 12, more suitably 1 to 6, carbon atoms, -S-,-S-S-, -SO₂-, -SO-, -CO-,-O-CO-O-, or -O-; each R is independently, hydrogen or a hydrocarbyl group having from 1 to 4 carbon atoms; each R' is independently hydrogen, a hydrocarbyl or hydrocarbyloxy group having from 1 to 4 carbon atoms, or a halogen, preferably chlorine or bromine; n has a value of zero or 1; and n' has a value suitably from zero to 10, more suitably from 0.1 to 5.

The term hydrocarbyl as employed herein means any aliphatic, cycloaliphatic, aromatic, aryl substituted aliphatic or cycloaliphatic, or aliphatic or cycloaliphatic substituted aromatic groups. The aliphatic and cycloaliphatic groups can be saturated or unsaturated. Likewise, the term hydrocarbyloxy means a hydrocarbyl group having an oxygen linkage between it and the carbon atom to which it is attached.

Particularly suitable dihydric phenols useful in the present invention include, for example, 2,2-bis(4-hydroxyphenyl)-propane (bisphenol A); 1,1-bis(2-hydroxyphenyl)-1-phenylethane (bisphenol AP); 1,1-bis(4-hydroxyphenyl)ethane; bis(4-hydroxyphenyl)methane (bisphenol F); p,p'-hydroxybiphenyl; phenolphthalein and substituted phenolphthalein, any aromatic compound with a bisphenol structure, and any combination thereof.

The monomer molar ratios between the aromatic diol and the cycloaliphatic diglycidyl ether compounds, such as a mixture of 1,3- and 1,4-cis and trans-cyclohexanedimethanol diglycidyl ether (e.g. UNOXOL™Diol DGE) may vary from about 5:1 to about 1:5, preferably from about 1:1.5 to about 1.5:1, and more preferably from about 1:1.1 to about 1.1:1. The monomer molar ratios are used to obtain high molecular weight advancement reaction products. As described in polymer textbooks, such as George Odian in Principles of Polymerization, 4th edition, a near stoichiometric monomer ratio, e.g. molar ratio between aromatic diol and cylcoaliphatic diglycidyl ether from about 1.1:1 to about 1:1.1, is used to prepare substantially linear high molecular weight products. A significant deviation from stoichiometric monomer ratio would lead to oligomers or low molecular weight products.

In another embodiment of the present invention, use of a reactant with moieties possessing different reactivity toward the epoxide group can be employed to provide a reactive oligomeric product, either *in situ* or in a separate reaction, which can then be further reacted to give an advancement reaction product of the present invention. This reactive oligomeric product can then be further reacted with the same or different reactants to produce an advancement reaction product of the present invention.

As a representative example, a monophenolmonocarboxylic acid may be reacted with an epoxy resin under conditions which substantially favor reaction of the carboxylic acid moiety leaving the phenolic hydroxyl moiety substantially unreacted. The resultant phenolic hydroxyl terminated product may then be reacted with an additional epoxy resin or an additional epoxy resin plus additional difunctional reactant to produce the advancement product of the present invention. As another representative example, an aromatic dicarboxylic acid may be reacted with an epoxy resin to produce an epoxy terminated oligomer product. The resultant epoxy terminated oligomer product may then be reacted with an aromatic diol or an additional epoxy resin plus additional difunctional reactant to produce the advancement product of the present invention. This method beneficially allows for incorporation of different structures into the product as well as control of the position of various chemical structures within the product.

The advancement reaction product of the present invention may contain unreacted epoxide groups which terminate the oligomer chains. Likewise the advancement reaction product may contain unreacted groups from the diol reactant, such as, for example, phenolic hydroxyl groups, which terminate the oligomer chains. Thus, for certain applications, it may be beneficial to react all or a part of one or both types of terminating end groups with one or more monofunctional reactants. A specific example follows where an aromatic diol and an epoxy resin of a cyclohexanedimethanol are reacted and residual terminating epoxide group of the advanced product is reacted with a monophenol as illustrated by the following reaction Scheme (II):

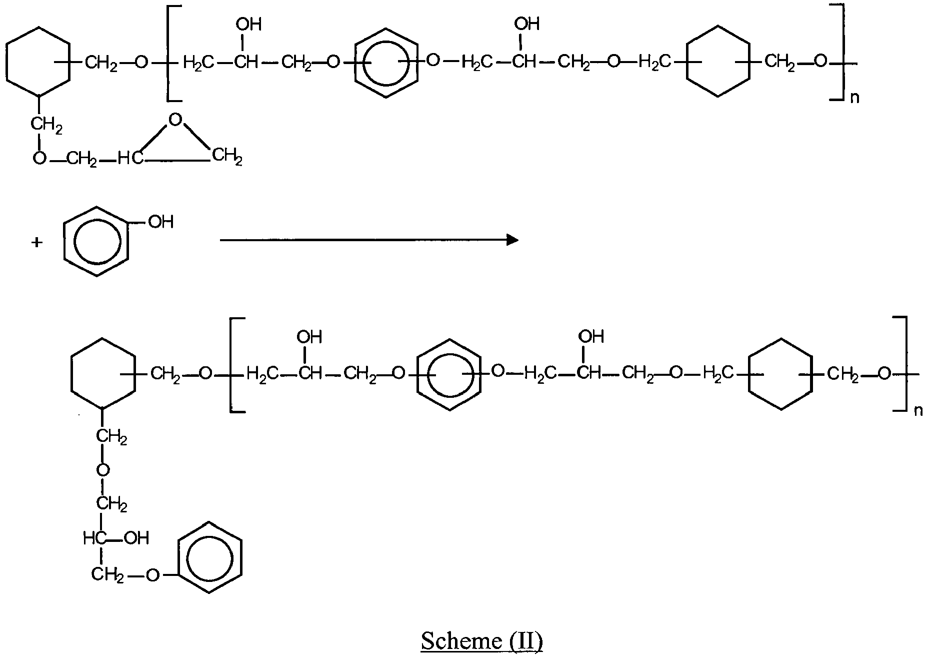

Terminal epoxide groups may be reacted with any monofunctional compound containing a single epoxide-reactive group and, likewise, the terminal group derived from the difunctional reactant may be reacted with any monofunctional compound containing a single reactive group. Representative of the monofunctional reactants for reaction with a terminal epoxide group include phenol, substituted phenols, naphthols, substituted naphthols, thiols, benzoic acid, substituted benzoic acids, phenylacetic acid, substituted phenylacetic acids, cyclohexane monocarboxylic acid, substituted cyclohexane monocarboxylic acids, naphthalene monocarboxylic acid, aliphatic monocarboxylic acids, such as, for example, hexanoic acid; secondary monoamines, such as, for example, N-methylcyclohexylamine or dihexylamine; dialkanolamines, such as, for example diethanolamine; mixtures thereof and the like.

Terminal phenolic hydroxyl groups may be reacted with a monoepoxide, such as, for example, phenylglycidyl ether, the monoglycidyl ether of cyclohexanol, or the monoglycidyl ether monol of cyclohexanedimethanol.

It may also be possible to incorporate one or more monofunctional reactants directly into the synthesis of the epoxy resin to terminate the chains of the advancement product, control molecular weight build, modify cure characteristics of the final product, modify physical or mechanical properties of the cured product therefrom, and for other reasons desired by a skilled artisan.

The advancement reaction products modified via reaction with one or more monofunctional reactants in the manner given above may possess enhanced physical and /or mechanical properties useful for various applications such as for can coating resins prepared therefrom. Thus modification of properties such as adhesion to a metal substrate, toughness, processability, and other improved properties may be achieved.

The preparation of a high molecular weight advancement reaction product of the present invention is achieved by adding to a reactor: a cycloaliphatic diglycidyl ether, a diphenol, optionally a catalyst, and optionally a solvent; and then allowing the components to react under reaction conditions to produce the advancement product. The components may be mixed in any order. The components are heated until the desired degree of reaction is achieved.

The reaction conditions to form the high molecular weight advancement reaction product include carrying out the reaction under a temperature, generally in the range of from 20 °C to 250 °C, preferably from 100 °C to 250 °C; more preferably from 125 °C to 225 °C; and most preferably, from 150 °C to 200 °C. The pressure of the reaction may be generally from 0.1 bar to 10 bar; preferably, from 0.5 bar to 5 bar: and more preferably, from 0.9 bar to 1.1 bar.

In a preferred embodiment, one or more suitable reaction catalysts may be employed in the practice of the present invention. Catalysts used to prepare the compositions of the present invention may be selected, for example, from one or more of, a metal salt such as an alkali metal salt, an alkaline earth metal salt, a tertiary amine, a quaternary ammonium salt, a sulfonium salt, a quaternary phosphonium salt, a phosphine and the like, and mixtures thereof. Preferably, the catalyst used in the present invention is tetrabutylphosphonium acetate-acetic acid complex, ethyltriphenylphosphonium acetate-acetic acid complex, or mixtures thereof.

The reaction catalyst is generally employed in an amount of from 0.0010 wt % to 10 wt %; preferably from 0.01 wt % to 10 wt %; more preferably from 0.05 wt % to 5 wt %, and most preferably from 0.1 wt % to 4 wt %, based on the combined weight of monomer compounds used.

The reaction process to prepare the high molecular weight advancement reaction product of the present invention may be batch or continuous. The reactor used in the process may be any reactor and ancillary equipment well known to those skilled in the art.

The examples of polymer modifications to the advancement reaction product of the present invention include, but are not limited to, capping with unsaturated acid monomers such as acrylic acids for radiation curing applications, making water dispersible resins for use in waterborne spray and roller coat applications for beverage and food cans. Thus, the advancement reaction product of the present invention may be made water dispersible as follows: (i) by adding water dispersible acrylic or polyester resins, (ii) by extending the product with water dispersible acrylic or polyester resins, (iii) by grafting with acid functional monomers which contain a double bond which is polymerizable by free radical mechanism such as (meth) acrylic acid and vinylic monomers not containing an acid group such as acrylic acid esters, styrene and the like, (iv) by reacting with phosphoric acid and water and the like, or (v) by at least partially neutralizing the reaction product of (i) to (iv) above with a base such as dimethanol amine. For example, EP17911, U.S. Patent No. 6,306,934 and WO2000039190, describe the formation of water dispersible epoxy resins and rendering them into dispersions.

The resin of the present invention as such could further undergo additional processes such as hydrogenation of any unsaturations or aromatic moieties to yield a resin which is fully saturated.

The high molecular weight advancement reaction products of the present invention have unusually high flexibility and high toughness at room temperature. The material flexibility and toughness were characterized by stress-strain behavior. Elongation to break, a common parameter to measure the flexibility, and tensile toughness are fundamental mechanical properties of materials. The tensile toughness is a measure of the ability of a material to absorb energy in a tensile deformation. The elongations to break of the advancement products of the present invention are about 80 to over about 1000 times higher than a typical prior known 9-type bisphenol A advanced based epoxy resin. In addition, the tensile toughnesses of the advancement reaction products of the present invention are over about 100 times stronger than a typical prior known 9-type bisphenol A advanced based epoxy resin.

The advancement products of the present invention are polymers with a weight average molecular weight of from 5,000 to 1,000,000, preferably from 5,000 to 500,000, more preferably from 5,000 to 100,000, even more preferably from 5,000 to 50,000, most preferably from 5,000 to 40,000, and even most preferably from 7,000 to 30,000.

The glass transition temperature of the advancement reaction products is generally between -50 °C to 200 °C, preferably from 0 °C to 150 °C, more preferably from 10 °C to 120 °C, even more preferably from 20 °C to 100 °C and most preferably from 25 °C to 90 °C.

The elongation at break of the advancement reaction products at room temperature is generally between 4 percent (%) to 10,000 %, preferably from 10 % to 5000 %, more preferably from 20 % to 2000 %, even more preferably from 30 % to 1500 %, most preferably from 40 % to 1200 %, and even most preferably from 50 % to 1100 %.

The tensile toughness of the advancement reaction products at room temperature is generally between 0.05 MPa to 500 MPa, preferably from 0.05 MPa to 500 MPa, more preferably from 0.1 MPa to 100 MPa, even more preferably from 0.5 MPa to 50 MPa, most preferably from 0.8 MPa to 30 MPa, and even most preferably from 1 MPa to 20 MPa.

Another embodiment of the present invention is directed to a curable composition comprising (i) the above advancement reaction product of Structure (I); (ii) at least one curing agent; (iii) at least one curing catalyst; (iv) optionally, at least one solvent; and (v) optionally, at least one additive.

The first component (i) of the curable composition comprises the advancement reaction product, as described above. The concentration of advancement reaction product used in the curable mixture of the present invention may range generally from 99.9 wt % to 10 wt %; preferably, from 99 wt % to 50 wt %; more preferably from 98 wt % to 75 wt%; and even more preferably, from 95 wt % to 85 wt %. Generally, the amount of advancement reaction product is selected based on the desired balance of properties of the resulting cured product.

A curing agent useful for the curable composition of the present invention may comprise any conventional curing agent known in the art for curing epoxy resins such as for example an epoxy resin, a phenolic resole, an amino formaldehyde resin, an amido formaldehyde resin or an anhydride resin, a polyvalent phenolic compound, and the like. The crosslinker may also be selected from crosslinkers with other reactive groups such as active alcoholic (-OH) groups, e.g. alkylol such as ethylol or other methylol groups, epoxy groups, carbodiimide groups, isocyanate groups, blocked isocyanate groups, aziridinyl groups, oxazoline groups, acid groups and anhydride groups, i-butoxymethylacrylamide and n-butoxymethylacrylamide groups and the like; unsaturated groups cured with an radical initiator and/or radiation, and mixtures thereof.

The ratios between the advancement reaction product, component (i); and the crosslinker, component (ii) of the curable composition, may vary depending on various factors such as the type of crosslinker used and the amount of curable moieties present in the advancement reaction product. However, in general the weight ratio may be from 0.1 wt % to 90 wt %, preferably from 1 wt % to 50 wt %, more preferably from 2 wt % to 25 wt %, and most preferably from 5 wt % to 15 wt %. The amount of the curing agent used in the curable composition generally is selected based on the desired balance of properties of the resulting cured product.

In preparing the curable composition of the present invention, at least one curing catalyst may be used to facilitate the curing reaction of the advancement product with the at least one curing agent. The curing catalyst useful in the present invention may include, for example an acid such as phosphoric acid or an organosulfonic acid or a base such as a tertiary amine or an organometallic compound such as organic derivative of tin, bismuth, zinc, or titanium or an inorganic compound such as oxide or halide of tin, iron, boron, or manganese; and mixtures thereof. The curing catalyst may also be a latent curing catalyst.

The curing catalyst is generally employed in an amount of from 0.01 wt % to 10 wt %; preferably from 0.05 wt % to a5 wt %, and more preferably from 0.1 wt % to 2 wt %, based on the combined weight of the advancement reaction product and curing agent used.

Also to facilitate the formation of a coating of the advancement reaction product with the at least one curing agent, a solvent may optionally be used. For example, one or more organic solvents well known in the art may be added to the advancement reaction product composition. For example, aromatics such as xylene, ketones such as methyl ethyl ketone and cyclohexanone, and ethers such as monobutyl ethylene glycol ether and diethylene glycol dimethyl ether (diglyme); alcohols such as butanols and mixtures thereof, may be used in the present invention.

The concentration of the solvent used in the present invention may range generally from 0 wt % to 90 wt %, preferably from 0.01 wt % to 80 wt %, more preferably from 1 wt % to 70 wt %, and even more preferably from 10 wt % to 60 wt %. Viscosity is greater than desired for certain applications or solvent may be wasted when the above concentration ranges are not used. However, it is possible to formulate coating compositions without any solvents, such as the application in powder coatings.

Additives generally known useful for the preparation, storage, application, and curing of advancement reaction products may be used as optional additional elements of the present invention, such as reaction catalysts, resin stabilizers, defoamers, wetting agents, curing catalysts, pigments, dyes and processing aids. An assortment of additives may be optionally added to the compositions of the present invention including for example, catalysts, solvents, other resins, stabilizers, fillers such as pigments and dyes, plasticizers, catalyst de-activators, and mixtures thereof.

Other optional additives that may be added to the curable composition of the present invention may include, for example, wetting agents, lubricants, defoamers, fillers, adhesion promotors, slip agents, anti cratering agents, plasticizers, catalyst de-activators, dispersants with acid functional / non ionic surfactants in water; and mixtures thereof and the like.

Other optional components that may be added to the curable composition of the present invention may include, for example polymeric coreactants such as an acrylic resin or polyester resin; resins such as polyesters, acrylic resins, polyolefins, urethane resins, alkyd resins, polyvinylacetates, epoxy resins, vinyl resins; and mixtures thereof and the like.

The curable composition or formulation of the present invention can be cured under conventional processing conditions to form a film, a coating, a foam or a solid. The process to produce the cured advancement reaction products of the present invention may be performed by gravity casting, vacuum casting, automatic pressure gelation (APG), vacuum pressure gelation (VPG), infusion, filament winding, lay up injection, transfer molding, prepreging, coating, such as roller coating, dip coating, spray coating and brush coating, and the like.

The curing reaction conditions include, for example, carrying out the reaction under a temperature, generally in the range of from 0 °C to 300 °C; preferably, from 20 °C to 250 °C; and more preferably, from 100 °C to 220 °C.

The pressure of the curing reaction may be carried out, for example, generally at a pressure of from 0.01 bar to 1000 bar; preferably, from 0.1 bar to 100 bar; and more preferably, from 0.5 bar to 10 bar.

The curing of the curable composition may be carried out, for example, for a predetermined period of time sufficient to cure or partially cure
(B-stage) the composition. For example, generally the curing time may be chosen between 2 seconds to 24 hours, preferably between 5 seconds to
2 hours, more preferably between 5 seconds to 30 minutes, and even more preferably between 8 seconds to 15 minutes. A B-staged composition of the present invention may then be completely cured at a later time using the aforementioned conditions.

The curing process of the present invention may be a batch or a continuous process. The reactor used in the process may be any reactor and ancillary equipment well known to those skilled in the art.

The resulting cured advancement product composition displays excellent thermo-mechanical properties, such as good flexibility measured by the Wedge Bend Flexibility test. The failure percentage measured by Wedge Bend Flexibility of the resulting cured advancement reaction product compositions is generally below 50 %, preferably below 25 %, more preferably below 15 %, even more preferably below 10 %, most preferably below 5 %, even most preferably below 4 %, still more preferably below 3 %, yet more preferably below 2 %, and most preferably below 1 %.

The resulting cured advancement reaction product composition displays good chemical solvent resistance, such as solvent resistance measured by the MEK Double Rub test. The solvent resistance measured by MEK Double Rub of the resulting cured advancement reaction product compositions is generally above 25, preferably above 50, more preferably between 50 to 200, even more preferably between 50 to 150, and most preferably between 50 to 125.

The curable advancement reaction product compositions of the present invention are useful for the preparation of cured advancement product in the form of coatings, films, adhesives, laminates, composites, electronics, and the like.

As an illustration of the present invention, in general, the curable advancement reaction product compositions may be useful for coating, casting, potting, encapsulation, molding, and tooling. The resulting cured advancement reaction product composition may be useful in some applications, such as encapsulations, castings, moldings, potting, encapsulations, injection, resin transfer moldings, composites, coatings and the like.

### EXAMPLES

The following examples and comparative examples further illustrate the present invention in detail but are not to be construed to limit the scope thereof.

Various terms and designations are used in the following Examples, including for example the following:
UNOXOL™ Diol is a mixture of cis-, trans-1,3- and 1,4-cyclohexanedimethanol obtained from The Dow Chemical Company. A product mixture of a diglycidyl ether of cis-1,3-cyclohexanedimethanol, a diglycidyl ether of trans-1,3-cyclohexanedimethanol, a diglycidyl ether of cis-1,4-cyclohexanedimethanol, a diglycidyl ether of trans-1,4-cyclohexanedimethanol (UNOXOL™ Diol DGE) was prepared and purified according to the method provided in Reference Example A.

Likewise, a product mixture of diglycidyl ether of cis-, trans-1,4-cyclohexanedimethanol (1,4-CHDM DGE) was prepared and purified using the method provided in Reference Example A.

Methylon 75108 is an allyl ether phenol-based phenolic resin crosslinker obtained from Durez Corporation. Byk-310 is a silicone additive obtained from Byk Chemie. DER™ 669E is a bisphenol A based high molecular weight 9-type advanced epoxy resin product obtained from The Dow Chemical Company. Catalyst A2 is a 70 % tetrabutylphosphonium acetate-acetic acid complex in methanol obtained from Deepwater Chemicals. All other chemicals were obtained from Sigma-Aldrich used as received, except where otherwise noted.

Standard analytical equipment and methods are used in the following Examples and Comparative Examples, including for example the following:

### Molecular Weight Measurement

Gel permeation chromatography (GPC) is used to measure the molecular weight and molecular weight distribution of advanced epoxy resins. The polymeric samples were diluted to about 0.25 weight % concentration with eluent and analyzed using the conditions below: columns: Polymer Labs 5 µm, 50Å, 100Å, 1000Å, and 10,000Å mono-pore size columns (4 in series); detector: Viscotek TDA 302 with triple-detection system. Differential reflective index (DRI) detector was used for relative MW calculations; eluent: Tetrahydrofuran; flow: 1 mL/min; temperature: 40°C; injection volume: 100 µL; calibration: Polymer Laboratories PS-2 linear polystyrene with 3rd order fitting.

### Glass Transition Temperature Measurement

Differential scanning calorimetry (DSC) is used to characterize the glass transition temperature (Tg) of advanced epoxy resins. The equipment is a Q1000 DSC from TA Instruments and the testing conditions are two heating and one cooling scans between - 50 °C and 250 °C at 10 °C/min under nitrogen. The reported Tg was calculated from the second heating scan.

### Microtensile Measurement

The tensile test is used to characterize toughness, elongation and the ability to resist failure under tensile stress. Stress-strain behavior of advanced epoxy resins is measured using ASTM D 1708 microtensile specimens. This microtensile test consists of pulling a sample of material until it breaks with an Instron™ at 20 mm/min at 21 °C equipped with a 200 lb load cell with pneumatic grips. The specimens tested may have a rectangular cross section. From the load and elongation history, a stress-strain curve is obtained with the strain being plotted on the x-axis and stress on the y-axis. The elongation at break is defined as the strain at which the specimen breaks. The tensile toughness is defined as the area under the entire stress-strain curve up to the fracture point. Tensile toughness and elongation at break are reported from an average of 5 specimens.

### Coating Thickness Measurements

The thickness measurements are performed with minor modification according to ASTM D 1186-93; "Non-destructive measurement of dry film thickness of non- magnetic coatings applied to a ferrous base" using a PERMASCOPE D-211D, coating thickness gauge. The sample panel without any coating is zeroed in and then coated panels are measured using a probe for ferrous materials and the measured thickness is reported in micron [µm].

### Methyl Ethyl Ketone (MEK) Double Rub Test

The MEK test is performed basically according to ASTM D 5402. The flat end of a hammer hemispherical having a weight of two pounds is used. A normal cheese cloth "VILEDA 3168" is bound around the hammer end. It is soaked with MEK. The hammer is brought onto the coating and moved back-and-forth over the whole coating, one back-and-forth motion being one double rub. Care should be taken not to put any pressure on the hammer. After every 25 double rubs the tissue is re-soaked with MEK. This is repeated until the coating is rubbed off to such an extent that the coating is visibly scratched. This procedure is carried out to failure or until the maximum of 200 double rubs is reached.

### Wedge Bend Flexibility Test

The wedge bend test is carried out as follows: A tapered 180 ° (degree) bend in the panel is formed by first bending it to 180° with a radius of about 0.5 cm and coating on the outside of the bend. Then one side of the bend was completely flattened to a near zero radius with an impactor at 40 in. lbs. The stressed surface is subjected to a tape pull and then rubbed with a solution of copper sulfate (solution of 10 grams (g) of copper sulfate, 90 g of water and 3 g of sulfuric acid). Anywhere the coating has cracked dark spots appear indicating failure. The amount of coating failure (in mm) along the length of the wedge bend, which is 100 mm, is recorded as "% failure."

### Reference Example A - Synthesis of Epoxy Resin of UNOXOL™ Diol

Epoxidation of UNOXOL™ Diol was performed using three stages of aqueous sodium hydroxide addition with post reaction at 40°C followed by fractional vacuum distillation to separate the constituents of the epoxy resin:

### Epoxidation Reaction

A 5 L, 4 neck, glass, round bottom reactor was charged with UNOXOL™ Diol (432.63 g, 3.0 moles, 6.0 hydroxyl eq), epichlorohydrin (1110.24 g, 12.0 moles, 2:1 epichlorohydrin:UNOXOL™ Diol hydroxyl eq ratio), toluene (2.5 L), and benzyltriethylammonium chloride (43.62 g, 0.1915 mole) in the indicated order. The reactor was additionally equipped with a condenser (maintained at 0°C), a thermometer, a Claisen adaptor, an overhead nitrogen inlet (1 LPM N₂ used), and a stirrer assembly (Teflon™ paddle, glass shaft, variable speed motor). [Teflon™ fluorocarbon resin is a trademark of E.I. duPont de Nemours.] A controller monitored the temperature registered on the thermometer in the reactor and provided heating via the heating mantle placed under the reactor as well as cooling delivered by a pair of fans positioned on the reactor exterior. Sodium hydroxide (360.0 g, 9.0 moles) dissolved in DI water (360 g) for the initial addition was added to a side arm vented addition funnel, sealed with a ground glass stopper, then attached to the reactor. Stirring commenced to give a 22.5°C mixture followed by commencement of dropwise addition of the aqueous sodium hydroxide solution. The reaction mixture was allowed to self-heat to 40°C during the aqueous sodium hydroxide addition time and then held at that temperature via cooling from the fans as needed. Thus, after 196 minutes the reaction temperature first reached 40°C and then remained at 39 - 40°C for the remainder of the aqueous sodium hydroxide addition. Addition of the aqueous sodium hydroxide was done in a total of 233 minutes. Fourteen minutes after completion of the aqueous sodium hydroxide addition, heating commenced to maintain the reaction at 40°C. After 16.2 hr of postreaction at 40°C, stirring ceased, and the reactor contents were allowed to settle. The organic layer was decanted from the reactor followed by addition of 1.5 L of DI water to the salt and residual toluene left behind in the reactor. After addition into a 2 L separatory funnel and settling, the toluene layer which separated from the aqueous salt solution was recovered and combined back with the decanted organic layer. The aqueous layer was discarded as waste. GC analysis after normalization to remove solvents (acetonitrile and toluene) and unreacted epichlorohydrin revealed the presence of 2.21 area % light components, 1.27 area % unreacted cis-, trans-1,3- and 1,4-cyclohexanedimethanol; 43.13 area % monoglycidyl ethers, 0.25 area % of a pair of components associated with the diglycidyl ether peaks, 50.20 area % diglycidyl ethers, and 2.94 area % oligomers that were volatile under the conditions of the GC analysis.

The organic layer was reloaded into the reactor along with fresh benzyltriethylammonium chloride (21.81 g, 0.0958 mole). Sodium hydroxide (180 g, 4.5 moles) dissolved in DI water (180 g) was added to a side arm vented addition funnel, sealed with a ground glass stopper, then attached to the reactor. Stirring commenced to give a 23.5°C mixture followed by commencement of dropwise addition of the aqueous sodium hydroxide solution. The reaction mixture was allowed to self-heat during the aqueous sodium hydroxide addition time. Thus, after 119 minutes 100 % of the aqueous sodium hydroxide was added causing the reaction temperature to reach a maximum of 30.5°C. Three minutes after completion of the aqueous sodium hydroxide addition, heating commenced to bring the reaction to 40°C after 11 minutes of heating. After 15.8 hr of postreaction at 40°C, stirring ceased, and the reactor contents were allowed to settle. The organic layer was decanted from the reactor followed by addition of 1.0 L of DI water to the salt and residual toluene left behind in the reactor. After addition into a 2 L separatory funnel and settling, the toluene layer which separated from the aqueous salt solution was recovered and combined back with the decanted organic layer. The aqueous layer was discarded as waste. GC analysis after normalization to remove solvents (acetonitrile and toluene) and unreacted epichlorohydrin revealed the presence of 5.62 area % light components, no detectable unreacted cis-, trans-1,3- and 1,4-cyclohexanedimethanol; 12.63 area % monoglycidyl ethers, 0.64 area % of a pair of components associated with the diglycidyl ether peaks, 76.30 area % diglycidyl ethers, and 4.81 area % oligomers that were volatile under the conditions of the GC analysis.

The organic layer was reloaded into the reactor along with fresh benzyltriethylammonium chloride (10.91 g, 0.0479 mole). Sodium hydroxide (90 g, 2.25 moles) dissolved in DI water (90 g) was added to a side arm vented addition funnel, sealed with a ground glass stopper, then attached to the reactor. Stirring commenced to give a 23 °C mixture followed by commencement of dropwise addition of the aqueous sodium hydroxide solution. The reaction mixture was allowed to self-heat during the aqueous sodium hydroxide addition time. Thus, after 50 minutes 66.67 % of the aqueous sodium hydroxide was added causing the reaction temperature to reach a maximum of 24.5 °C. This temperature was maintained for the remainder of the aqueous sodium hydroxide addition. Addition of the aqueous sodium hydroxide took a total of 61 minutes. Immediately after completion of the aqueous sodium hydroxide addition, heating commenced to bring the reaction to 40 °C after 22 minutes of heating. After 16.7 hours of postreaction at 40 °C, stirring ceased, and the reactor contents were allowed to settle. The organic layer was decanted from the reactor followed by addition of 1.0 L of DI water to the salt and residual toluene left behind in the reactor. After addition into a 2 L separatory funnel and settling, the toluene layer which separated from the aqueous salt solution was recovered and combined back with the decanted organic layer. The aqueous layer was discarded as waste. GC analysis after normalization to remove solvents (acetonitrile and toluene) and unreacted epichlorohydrin revealed the presence of 8.62 area % light components, no detectable unreacted cis-, trans-1,3- and 1,4-cyclohexanedimethanol; 9.91 area % monoglycidyl ethers, 0.46 area % of a pair of components associated with the diglycidyl ether peaks, 75.29 area % diglycidyl ethers, and 5.72 area % oligomers that were volatile under the conditions of the GC analysis.

### Epoxy Resin Product Isolation

After removal of the aqueous layer from the reaction with the third aqueous sodium hydroxide addition, the organic layer was equally split between the pair of separatory funnels and the contents of each respective separatory funnel then washed with DI water (400 mL) by vigorously shaking. The washed product was allowed to settle for 2 hours, then the aqueous layer was removed and discarded as waste. A second wash was completed using the aforementioned method, with settling overnight (20 hours) sufficient to fully resolve the organic and aqueous layers. The combined, hazy organic solution was filtered through a bed of anhydrous, granular sodium sulfate in a 600 mL fritted glass funnel providing a transparent filtrate.

Rotary evaporation of the filtrate using a maximum oil bath temperature of 100 °C to a final vacuum of 2.4 mm of Hg removed the bulk of the volatiles. A total of 712.20 g of light yellow colored, transparent liquid was recovered after completion of the rotary evaporation. GC analysis after normalization to remove solvent (acetonitrile) revealed the presence of 9.76 area % monoglycidyl ethers, 0.38 area % of a pair of components associated with the diglycidyl ether peaks, 82.39 area % diglycidyl ethers, and 7.47 area % oligomers that were volatile under the conditions of the GC analysis. Thus, GC analysis revealed that essentially all light boiling components, including residual epichlorohydrin, had been removed.

### Fractional Vacuum Distillation

A portion (699.19 g) of the product from the rotary evaporation was added to a 1 L, 3 neck, glass, round bottom reactor equipped with magnetic stirring and a thermometer for monitoring the pot temperature. A one piece integral vacuum jacketed Vigreux distillation column with distillation head was used. The distillation column nominally provided 9 to 18 theoretical plates depending on the mode of operation. A second section of jacketed Vigreux column was added between the one piece integral vacuum jacketed Vigreux distillation column with head and the reactor to provide an additional 9 to 18 theoretical plates. The distillation head was equipped with an overhead thermometer, air cooled condenser, a receiver and a vacuum takeoff. A vacuum pump was employed along with a liquid nitrogen trap and an in-line digital thermal conductivity vacuum gauge. Stirring commenced followed by application of full vacuum then progressively increased heating using a thermostatically controlled heating mantle. A clean receiver was used to collect each respective distillation cut. During the distillation, the initial distillation cuts were taken to sequentially remove all components boiling below the cyclohexanedimethanols, all unreacted cyclohexanedimethanols, and the bulk of the monoglycidyl ethers. Intermediate cuts removed various mixtures of monoglycidyl ethers and diglycidyl ethers. The final distillation cuts sought to selectively remove diglycidyl ether, with the final cut (270.5 g) providing a mixture comprising 0.11 area % monoglycidyl ethers, 0.48 area % of a pair of components associated with the diglycidyl ether peaks, 99.41 area % diglycidyl ethers, and no detectable oligomers. The oligomeric product (279.39 g) remained in the distillation pot.

### Example 1 - Resin Preparation: UNOXOL™ Diol DGE/Catechol

A mixture of 28.2 g of catechol, 70.9 g of UNOXOL™ Diol DGE and 303.8 g of diethylene glycol dimethyl ether (diglyme) was stirred and heated to 140 °C in a 500 mL 3-neck flask with a condenser and nitrogen purge. At 140 °C, 2.1 g of Catalyst A2 was charged to the flask. The resulting mixture was further heated to 163 °C. Polymerization of the reaction mixture was monitored by the titration of residual epoxy group in the reaction mixture. The reaction was stopped after 3.5 hours when 96% of epoxide was reacted. The resultant polymer solution was precipitated into 1500 mL of an ice and methanol mixture contained in a blender. The resulting polymer was collected, washed with methanol three times, and dried using a vacuum oven at 70 °C for 24 hours. The resulting polymer product was a light-yellow clear solid. The polymer product's glass transition temperature is 27 °C and the product's weight average molecular weight is 15,350.

### Example 2 - Resin Preparation: 1, 4-CHDM DGE/Catechol

A mixture of 12.2 g of catechol, 30.0 g of 1,4-CHDM DGE (purity=99.0 area% by gas chromatography) and 129.3 g of diglyme was stirred and heated to 140 °C in a 250 mL 3-neck flask with a condenser and nitrogen purge. At 140 °C, 0.9 g of Catalyst A2 was charged to the flask. The resulting mixture was further heated to 163 °C. Polymerization of the reaction mixture was monitored by the titration of residual epoxy group in the reaction mixture. The reaction was stopped after 13 hours when 98.9% of the epoxide was reacted. The resultant polymer solution was precipitated into 750 mL of an ice and methanol mixture contained in a blender. The resulting polymer was collected, washed with methanol three times, and dried using a vacuum oven at 70 °C for 24 hours. The resulting polymer product was a light-yellow clear solid. The polymer product's glass transition temperature is 31 °C and the weight average molecular weight is 27,590.

### Example 3 - Resin Preparation: UNOXOL™ Diol DGE/Resorcinol

A mixture of 16.0 g of resorcinol, 41.1 g of UNOXOL™ Diol DGE and 173.7 g of diglyme was stirred and heated to 140 °C in a 250 mL 3-neck flask with a condenser and nitrogen purge. At 140 °C, 1.2 g of Catalyst A2 was charged to the flask. The resulting mixture was further heated to 163 °C. Polymerization of the reaction mixture was monitored by the titration of residual epoxy group in the reaction mixture. The reaction was stopped after 3.6 hours when 94.6% of epoxide was reacted. The resultant polymer solution was precipitated into 1500 mL of an ice and methanol mixture contained in a blender. The resulting polymer was collected, washed with methanol three times, and dried using a vacuum oven at 70 °C for 24 hours. The resulting polymer product was a light-yellow clear solid. The polymer product's glass transition temperature is 25.8 °C and its weight average molecular weight was measured to be 21,650.

### Example 4 - Resin Preparation: UNOXOL™ Diol DGE/Hydroquinone

A mixture of 28.2 g of hydroquinone, 70.9 g of UNOXOL™ Diol DGE and 303.8 g of diglyme was stirred and heated to 140 °C in a 500 mL 3-neck flask with a condenser and nitrogen purge. At 140 °C, 2.1 g of Catalyst A2 was charged to the flask. The resulting mixture was further heated to 163 °C. Polymerization of the reaction mixture was monitored by the titration of residual epoxy group in the reaction mixture. The reaction was stopped after 2 hours when 97.3 % of epoxide was reacted. The resultant polymer solution was precipitated into 1500 mL of an ice and methanol mixture contained in a blender. The resulting polymer was collected, washed with methanol three times, and dried using a vacuum oven at 70 °C for 24 hours. The resulting polymer product was a light-yellow clear solid. The polymer product's glass transition temperature is 32.8 °C and its weight average molecular weight was measured to be 25,850.

### Example 5 - Resin Preparation: UNOXOL™ Diol DGE/Bisphenol A

A mixture of 20.0 g of bisphenol A, 24.4 g of UNOXOL™ Diol DGE and 136.2 g of diglyme was stirred and heated to 140 °C in a 250 mL 3-neck flask with a condenser and nitrogen purge. At 140 °C, 0.95 g of Catalyst A2 was charged to the flask. The resulting mixture was further heated to 163 °C. Polymerization of the reaction mixture was monitored by the titration of residual epoxy group in the reaction mixture. The reaction was stopped after 2.6 hours when 96.1 % of epoxide was reacted. The resultant polymer solution was precipitated into 750 mL of an ice and methanol mixture contained in a blender. The resulting polymer was collected, washed with methanol three times, and dried using a vacuum oven at 70 °C for 24 hours. The resulting polymer product was a light-yellow clear solid. The polymer product's glass transition temperature is 44.2 °C and its weight average molecular weight was measured to be 22,850.

### Comparative Example A - Commercial Resin

For comparison, a commercially available high molecular weight bisphenol A advanced epoxy resin, DER™ 669E, was measured by DSC and GPC for its Tg and molecular weight. The glass transition temperature of this bisphenol A based 9-type advanced epoxy resin is 88.3 °C and its weight average molecular weight is 17,450. The results indicate that our new epoxy resins, Examples 1-6, have similar weight average molecular weight as the bisphenol A based DER™ 669E..

### Comparative Example B - Resin Preparation: Undistilled UNOXOL™ DGE/Catechol

A mixture of 12.5 g of catechol, 35.3 g of undistilled UNOXOL™ Diol DGE product (Epoxy Equivalent Weight (EEW)=151), which was collected before the Fractional Vacuum Distillation step in Reference Example A, and 146.6 g of diglyme was stirred and heated to 140 °C in a 250 mL 3-neck flask with a condenser and nitrogen purge. At 140 °C, 1.03 g of Catalyst A2 was charged to the flask. The resulting mixture was further heated to 163 °C. Polymerization of the reaction mixture was monitored by the titration of residual epoxy group in the reaction mixture. The reaction was stopped after 3.1 hours when it was gelled. The reaction product was a crosslinked gel and not soluble in the polymerization solvent, diglyme. The crosslinked product was formed due to the presence of the impurities with functionality higher than 2 epoxide groups per molecule in the undistilled UNOXOL™ Diol DGE product. Those higher functional impurities can induce unwanted branching and premature crosslinking or gelation during polymerization process.

### Comparative Example C - Resin Preparation: cis-, trans-1,4-CHDM DGE/Catechol

A mixture of 12.0 g of catechol, 34.5 g of cis-, trans-1,4-CHDM commercially available from CVC Thermoset Specialties (ERISYS™ GE-22, EEW=159) produced via a Lewis acid catalyzed epoxidation process and 143.7 g of diglyme was stirred and heated to 140 °C in a 250 mL 3-neck flask with a condenser and nitrogen purge. At 140 °C, 1.0 g of Catalyst A2 was charged to the flask. The resulting mixture was further heated to 163 °C. Polymerization of the reaction mixture was monitored by the titration of residual epoxy group in the reaction mixture. The reaction was stopped after 24 hours when 97.5% of epoxide was reacted. The resultant polymer solution was precipitated into 750 mL of an ice and methanol mixture contained in a blender. The resulting polymer was collected, washed with methanol three times, and dried using a vacuum oven at 70 °C for 24 hours. The resulting polymer product was a light-yellow soft oligomer. The product's glass transition temperature is 16.6 °C and its weight average molecular weight was measured to be 3550.

The formation of low molecular weight advancement product is due to higher amounts of monoglycidyl ether components in the commercial 1, 4-CHDM DGE product. The monofunctional components generally function as a chain terminator in the polymerization reaction and prevent the formation of high molecular weight epoxy resin product.

The material flexibility and toughness were characterized by stress-strain behavior under microtensile measurement according to ASTM D 1708. The microtensile results of advanced epoxy resins are shown in Table I, in comparison with DER™ 669E, the bisphenol A based 9-type advanced epoxy resin. The elongations to break of the advanced epoxy resins of the present invention are about 80 to over 1000 times higher than those provided by DER™ 669E. The tensile toughness of the advanced epoxy resins of the present invention are over 100 times that provided by DER™ 669E. The data in Table I show that the advanced epoxy resins in the present invention are more flexible and tough than the 9-type bisphenol A based advanced epoxy resin, although their weight average molecular weights are in a similar range.

**Table I. Microtensile Results for Epoxy Resins**

| Sample # | Elongation to Break (%) | Tensile Toughness (Mpa) |
|---|---|---|
| Example 1 | 617 | 6.66 |
| Example 2 | 1088 | 7.33 |
| Example 3 | 911 | 5.40 |
| Example 4 | 553 | 11.76 |
| Example 5 | 52 | 5.05 |
| Comparative Example A: DER™ 669E | 0.67 | 0.03 |
| Comparitive Example B | NA¹ | NA¹ |
| Comparitive Example C | 0² | 0² |

| | | |
|---|---|---|
| ¹ not applicable, resin gelled during synthesis. ² sample too fragile to obtain microtensile measurement at testing temperature. | | |

### Example 6 - Coating of Epoxy Resin from Example 1

A mixture of 10.000 g of epoxy resin from Example 1, 1.111 g of phenolic crosslinker (Methylon 75108), 0.016 g of catalyst (85% phosphoric acid), 0.013 g of additive (BYK-310), 26.666 g of monobutyl ethylene glycol ether and 6.667 g of cyclohexanone was agitated for 16 hours forming a clear solution. The clear solution was filtered through a 1-micron syringe filter and then coated on tin free steel (TFS) panels with a # 20 draw down bar. The panels with coatings were dried and cured in an oven at 205 °C for 15 minutes. The thickness of the cured coating is 5.0 micron.

### Example 7 - Coating of Epoxy Resin from Example 2

A mixture of 10.000 g of epoxy resin from Example 2, 1.111 g of phenolic crosslinker (Methylon 75108), 0.028 g of catalyst (85 % phosphoric acid), 0.013 g of additive (BYK-310), 26.666 g of monobutyl ethylene glycol ether and 6.667 g of cyclohexanone was agitated for 16 hours. The clear solution was filtered through a 1-micron syringe filter and then coated on tin free steel (TFS) panels with a # 20 draw down bar. The panels with coatings were dried and cured in an oven at 205 °C for 10 minutes. The thickness of the cure coating is 5.2 micron.

### Example 8 - Coating of Epoxy Resin from Example 3

A mixture of 10.000 g of epoxy resin from Example 3, 1.111 g of phenolic crosslinker (Methylon 75108), 0.016 g of catalyst (85% phosphoric acid), 0.013 g of additive (BYK-310), 26.666 g of monobutyl ethylene glycol ether and 6.667 g of cyclohexanone was agitated for 16 hours. The clear solution was filtered through a 1-micron syringe filter and then coated on tin free steel (TFS) panels with a # 20 draw down bar. The panels with coatings were dried and cured in an oven at 205 °C for 15 minutes. The thickness of the cured coating is 4.8 micron.

### Example 9 - Coating of Epoxy Resin from Example 4

A mixture of 10.000 g of epoxy resin from Example 4, 1.111 g of phenolic crosslinker (Methylon 75108), 0.016 g of catalyst (85 % phosphoric acid), 0.013 g of additive (BYK-310), 26.666 g of monobutyl ethylene glycol ether and 6.667 g of cyclohexanone was agitated for 16 hours. The clear solution was filtered through a 1-micron syringe filter and then coated on tin free steel (TFS) panels with a # 20 draw down bar. The panels with coatings were dried and cured in an oven at 205 °C for 10 minutes. The thickness of the cured coating is 4.6 micron.

### Example 10 - Coating of Epoxy Resin from Example 5

A mixture of 10.000 g of epoxy resin from Example 5, 1.111 g of phenolic crosslinker (Methylon 75108), 0.016 g of catalyst (85 % phosphoric acid), 0.013 g of additive (BYK-310), 26.666 g of monobutyl ethylene glycol ether and 6.667 g of cyclohexanone was agitated for 16 hours. The clear solution was filtered through a 1-micron syringe filter and then coated on tin free steel (TFS) panels with a # 20 draw down bar. The panels with coatings were dried and cured in an oven at 205 °C for 10 minutes. The thickness of the cured coating is 4.6 micron.

### Comparative Example D - Coating of DER™ 669E

A mixture of 10.000 g of DER™ 669E, 1.111 g of phenolic crosslinker (Methylon 75108), 0.016 g of catalyst (85 % phosphoric acid), 0.013 g of additive (BYK-310), 26.666 g of monobutyl ethylene glycol ether and 6.667 g of cyclohexanone was agitated for 16 hours. The clear solution was filtered through a 1-micron syringe filter and then coated on tin free steel (TFS) panels with a # 20 draw down bar. The panels with coating were dried and cured in an oven at 205 °C for 15 minutes. The thickness of the cured coating is 5.0 micron.

### Comparative Example E- Coating of Epoxy Resin from Comparative Example C

A mixture of 10.000 g of epoxy resin from Comparative Example C, 1.111 g of phenolic crosslinker (Methylon 75108), 0.016 g of catalyst (85 % phosphoric acid), 0.013 g of additive (BYK-310), 26.666 g of monobutyl ethylene glycol ether and 6.667 g of cyclohexanone was agitated for 16 hours. The clear solution was filtered through a 1-micron syringe filter and then coated on tin free steel (TFS) panels with a # 20 draw down bar. The panels with coatings were dried and cured in an oven at 205 °C for 15 minutes. The thickness of the cured coating is 5.1 micron.

All epoxy coatings from Examples 6-10 and Comparative Examples D and E are based on similar coating formulations except that different epoxy resins were used. All cured coatings are smooth and uniform without apparent defects. The flexibility of the cured coatings was evaluated by wedge bend measurement and the chemical solvent resistance of the coatings was tested by MEK double rub tests. The results of the testing are shown in Table II. There was not any cracking and failure in the stressed coating surfaces from coatings in Examples 6-10 based on new epoxy resins in this invention, while the coatings in Comparative Example D based on 9-type high molecular weight DER™ 669E advanced epoxy resin showed 25 % failure area and the coatings in Comparative Example E based on low molecular weight advanced epoxy resin showed 100% failure area. The wedge bend results indicate that the cured coatings based on the novel high molecular weight epoxy resins of the present invention are more flexible than coatings from known bisphenol A based high molecular weight epoxy resin. The low molecular weight advanced epoxy resin made from the commercially available 1,4-CHDM DGE prepared using a Lewis acid catalyzed epoxidation process does not have the flexibility advantage. The MEK double rub test results illustrate that the cured coatings based on the high molecular weight advanced epoxy resins of the present invention provide similar chemical solvent resistance to the coatings from the bisphenol A based high molecular weight advanced epoxy resin.

**Table II - Coating Evaluation Results**

| Coating # | Wedge Bend (failure %) | MEK Double Rub |
|---|---|---|
| Example 6 | 0 | 50 |
| Example 7 | 0 | 75 |
| Example 8 | 0 | 125 |
| Example 9 | 0 | 50 |
| Example 10 | 0 | 50 |
| Comparative Example D | 25 | 75 |
| Comparative Example E | 100 | 50 |

### Example 11 - Resin Preparation: 1,4-CHDM DGE/2,7-dihydroxynathphanlene

A mixture of 80.09 grams of 2,7-dihydroxynathphanlene, 137.87 grams of 1,4-CHDM DGE (purity=99.6 area% by gas chromatography) and 165.83 grams of diglyme was stirred and heated to 123 °C in a 500 mL 4-neck flask with a condenser and nitrogen purge and a mechanic stirrer. At 123 °C, 1.86 grams of Catalyst ethyltriphenylphosphonium iodide was charged to the flask. The resulting mixture was further heated to 164 °C. Polymerization of the reaction mixture was monitored by the titration of residual epoxy group in the reaction mixture. The reaction was stopped after 2.5 hours when 95.9% of the epoxide was reacted. The resultant polymer solution was precipitated into 500 mL of methanol contained in a blender. The resulting polymer was collected, washed with methanol three times, and dried using a vacuum oven at 60°C for 24 hours. The resulting polymer product was a light-yellow clear solid. The polymer product's glass transition temperature is 54°C, the weight average molecular weight is 20029, the OH number is 266 mgKOH/g, and melt viscosity at 150°C is 95108 cps.

### Example 12 - Resin preparation: 1,4-CHDM DGE/2,3-dihydroxynathphanlene

A mixture of 55.0 grams of 2,3-dihydroxynathphanlene, 94.68 grams of 1,4-CHDM DGE (purity=99.6 area% by gas chromatography) and 150.96 grams of diglyme vas stirred and heated to 30 °C in a 500 mL 4-neek flask with a condenser and nitrogen purge and a mechanic stirrer. At 131 °C, 1.28 grams of Catalyst ethyltriphenylphosphonium iodide was charged to the flask. The resulting mixture was further heated to 65 °C. Polymerization of the reaction mixture was monitored by the titration of residual epoxy group in the reaction mixture. The reaction was stopped after 4.5 hours when 96.7% of the epoxide was reacted. The resultant polymer solution was precipitated into 500 mL of methanol contained in a blender. The resulting polymer was collected, washed with methanol three times, and dried using a vacuum oven at 60 °C for 24 hours. The resulting polymer product was a white clear solid. The polymer product's glass transition temperature is 64 °C, the weight average molecular weight is 17381, the OH number is 260 mgKOH/g, and melt viscosity at 150°C is 32888 cps.

### Example 13 - Resin preparation: 1,4-CHDM DGE/1,5-dihydroxynathphanlene

A mixture of 70.0 grams of 1,5-dihydroxynathphanlene, 120.50 grams of 1,4-CHDM DGE (purity=99.6 area% by gas chromatography) and 192.13 grams of diglyme was stirred and heated to 130 °C in a 500 mL 4-neck flask with a condenser and nitrogen purge and a mechanic stirrer. At 131 °C, 1.62 grams of Catalyst ethyltriphenylphosphonium iodide was charged to the flask. The resulting mixture was further heated to 164 °C. Polymerization of the reaction mixture was monitored by the titration of residual epoxy group in the reaction mixture. The reaction was stopped after 5 hours when 96.0% of the epoxide was reacted. The resultant polymer solution was precipitated into 500 mL of methanol contained in a blender. The resulting polymer was collected, washed with methanol three times, and dried using a vacuum oven at 60 °C for 24 hours. The resulting polymer product was a dark green clear solid. The polymer product's glass transition temperature is 60 °C, the weight average molecular weight is 34693, the OH number is 255 mgKOH/g, and melt viscosity at 150°C is 428360 cps.

### Example 14 - Resin preparation: 1,4-CHDM DGE/4,4'-sulfonylbisphenol (BPS)

A mixture of 80.0 grams of 4,4'-sulfonylbisphenol (BPS), 90.06 grams of 1,4-CHDM DGE (purity=99.6 area% by gas chromatography) and 171.5 grams of diglyme was stirred and heated to 120 °C in a 500 mL 4-neck flask with a condenser and nitrogen purge and a mechanic stirrer. At 120 °C, 1.45 grams of Catalyst ethyltriphenylphosphonium iodide was charged to the flask. The resulting mixture was further heated to 164 °C. Polymerization of the reaction mixture was monitored by the titration of residual epoxy group in the reaction mixture. The reaction was stopped after 2 hours when 94.6% of the epoxide was reacted. The resultant polymer solution was precipitated into 500 mL of methanol contained in a blender. The resulting polymer was collected, washed with methanol three times, and dried using a vacuum oven at 60 °C for 24 hours. The resulting polymer product was a white clear solid. The polymer product's glass transition temperature is 38 °C, the weight average molecular weight is 16723, the OH number is 195 mgKOH/g, and melt viscosity at 150°C is 103687 cps.

### Example 15 - Resin preparation (melt process): 1,4-CHDM DGE/2,2'-biphenol

A mixture of 25.0 grams of 2,2'-biphenol, 36.57 g of 1,4-CHDM DGE (purity=99.6 area% by gas chromatography) was stirred and heated to 100 °C in a 100 mL cylinder flask with 4-neck containing flange with a condenser and nitrogen purge and a mechanic stirrer. At 100 °C, 0.1128 grams of Catalyst ethyltriphenylphosphonium iodide was charged to the flask. The resulting mixture was further heated to 210°C during 2 hrs then to 210°C during 30min. Polymerization of the reaction mixture was monitored by the titration of residual epoxy group in the reaction mixture. The reaction was stopped after 2.5 hours when 97.1 % of the epoxide was reacted. The resultant polymer was poured out and collected. The resulting polymer product was a light-yellow clear solid. The polymer product's glass transition temperature is 38 °C, the weight average molecular weight is 20932, the OH number is 241 mgKOH/g, and melt viscosity at 150°C is 11160 cps.

### Example 16 coating of epoxy resin from Example 11

A mixture of 3.97 g epoxy resin from Example 6, 0.5 g phenolics crosslinker (Methylon 75108), 0.054 g of catalyst (10% phosphoric acid aqueous solution), 0.045 g of additive (BYK-310), 15.3 g of monbutyl ethylene glycol ether and cyclohexanone mixture (80/20 ratio by weight) was agitated overnight to form a clear solution. The clear solution was filtered through a 1 µm syringe filter and then coated on electrolytically tin plated steel (ETP) panels with a #22 wire wound rod drawdown bar. The coated panels were dried and cured in an oven at 205 °C for 10 minutes. The thickness of the cured coating is 8.1 µm.

### Example 17 coating of epoxy resin from Example 12

A mixture of 3.97 g epoxy resin from Example 7, 0.5 g phenolics crosslinker (Methylon 75108), 0.189 g of catalyst (10% phosphoric acid aqueous solution), 0.045 g of additive (BYK-310), 15.4 g of monobutyl ethylene glycol ether and cyclohexanone mixture (80/20 ratio by weight) was agitated overnight to form a clear solution. The clear solution was filtered through a 1 µm syringe filter and then coated on electrolytically tin plated steel (ETP) panels with a #22 wire wound rod drawdown bar. The coated panels were dried and cured in an oven at 205 °C for 10 minutes. The thickness of the cured coating is 6.4 µm.

### Example 18 coating of epoxy resin from Example 13

A mixture of 3.98 g epoxy resin from Example 8, 0.5 g phenolics crosslinker (Methylon 75108), 0.0945 g of catalyst (10% phosphoric acid aqueous solution), 0.045 g of additive (BYK-310), 15.38 g of monobutyl ethylene glycol ether and cyclohexanone mixture (80/20 ratio by weight) was agitated overnight to form a clear solution. The clear solution was filtered through a 1 µm syringe filter and then coated on electrolytically tin plated steel (ETP) panels with a #22 wire wound rod drawdown bar. The coated panels were dried and cured in an oven at 205 °C for 10 minutes. The thickness of the cured coating is 6.9 µm.

### Example 19 coating of epoxy resin from Example 14

A mixture of 3.97 g epoxy resin from Example 9, 0.5 g phenolics crosslinker (Methylon 75108), 0.225 g of catalyst (10% phosphoric acid aqueous solution), 0.022 g of additive (BYK-310), 15.28 g of monobutyl ethylene glycol ether and cyclohexanone mixture (80/20 ratio by weight) was agitated overnight to form a clear solution. The clear solution was filtered through a 1 µm syringe filter and then coated on electrolytically tin plated steel (ETP) panels with a #22 wire wound rod drawdown bar. The coated panels were dried and cured in an oven at 205 °C for 10 minutes. The thickness of the cured coating is 4.3 µm.

### Example 20 coating of epoxy resin from Example 15

A mixture of 3.97 g epoxy resin from Example 10, 0.5 g phenolics crosslinker (Methylon 75108), 0.225 g of catalyst (10% phosphoric acid aqueous solution), 0.022 g of additive (BYK-310), 15.28 g of monobutyl ethylene glycol ether and cyclohexanone mixture (80/20 ratio by weight) was agitated overnight to form a clear solution. The clear solution was filtered through a 1 µm syringe filter and then coated on electrolytically tin plated steel (ETP) panels with a #22 wire wound rod drawdown bar. The coated panels were dried and cured in an oven at 205 °C for 10 minutes. The thickness of the cured coating is 6.4 µm.

**Coating Evaluation Results**

| Coating # | Wedge Bend (failure %) | MEK Double Rub |
|---|---|---|
| Example 16 | 0 | 50 |
| Example 17 | 4 | 140 |
| Example 18 | 9 | 90 |
| Example 19 | 33 | 150 |
| Example 20 | 15 | 25 |

## Claims

1. A composition comprising an advancement reaction product having the following chemical structure: 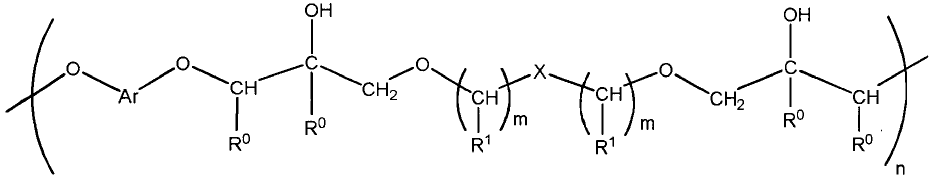 where n is a number from 1 to about 3000; each m independently has a value of 0 or 1; each R⁰ is independently -H or -CH₃; each R¹ is independently -H or a C₁ to C₆ alkylene radical (saturated divalent aliphatic hydrocarbon radical), Ar is a divalent aryl group or heteroarylene group; and X is a cycloalkylene group, including a substituted cycloalkylene group, where the substituent group includes an alkyl, cycloalkyl, an aryl or an aralkyl group or other substituent group, for example, a halogen, a nitro, or a blocked isocyanate, an alkyloxy group; the combination of cycloalkylene and alkylene groups and the combination of alkylene and cycloalkylene group with a bridging moiety in between and wherein the weight average molecular weight of the advancement reaction product is from 5,000 to 1,000,000.

2. The composition of claim 1, wherein the advancement reaction product comprises a reaction product of (a) at least one cycloaliphatic diglycidyl ether compound, and (b) at least one aromatic diol.

3. The composition of claim 2, wherein the at least one cycloaliphatic diglycidyl ether compound comprises a diglycidyl ether of cyclohexanedimethanol.

4. The composition of claim 2, wherein the at least one cycloaliphatic diglycidyl ether compound comprises a diglycidyl ether of cis-1,3-cyclohexanedimethanol and/or a diglycidyl ether of trans-1,3-cyclohexanedimethanol.

5. The composition of claim 2, wherein the at least one cycloaliphatic diglycidyl ether compound comprises a diglycidyl ether of cis-1,4-cyclohexanedimethanol and/or a diglycidyl ether of trans-1,4-cyclohexanedimethanol.

6. The composition of claim 2, wherein the at least one cycloaliphatic diglycidyl ether compound comprises a diglycidyl ether of cis-1,3-cyclohexanedimethanol, a diglycidyl ether of trans-1,3-cyclohexanedimethanol, a diglycidyl ether of cis-1,4-cyclohexanedimethanol, and/or a diglycidyl ether of trans-1,4-cyclohexanedimethanol.

7. The composition of claim 2, wherein the at least one cycloaliphatic diglycidyl ether compound comprises a diglycidyl ether of 1,1-cyclohexanedimethanol.

8. The composition of claim 2, wherein the at least one aromatic diol comprises a compound having the following chemical structure: 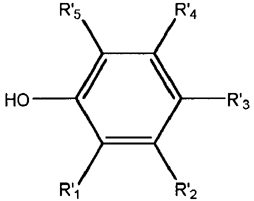 where one and only one of R'₁-R'₅ is a hydroxyl group; the remaining four substituents among R'₁-R'₅ are independently hydrogen, an alkyl, cycloalkyl, an aryl or an aralkyl group or other substituent, for example, a halogen, a nitro, a blocked isocyanate, or an alkyloxy group; additionally, any two of those remaining R'₁-R'₅ groups may form a fused aliphatic or aromatic ring independently.

9. The composition of claim 8, wherein the at least one aromatic diol comprises catechol, a substituted catechol, resorcinol, a substituted resorcinol, hydroquinone, a substituted hydroquinone, or mixtures thereof.

10. The composition of claim 2, wherein the at least one aromatic diol comprises a compound having the following chemical structure, Formula III or Formula IV:

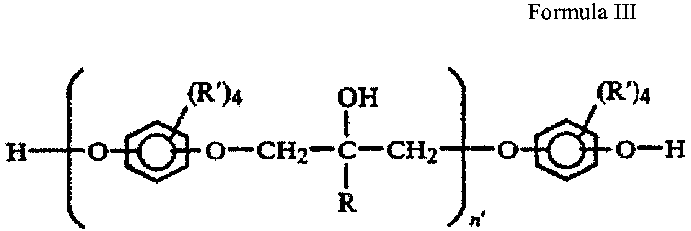

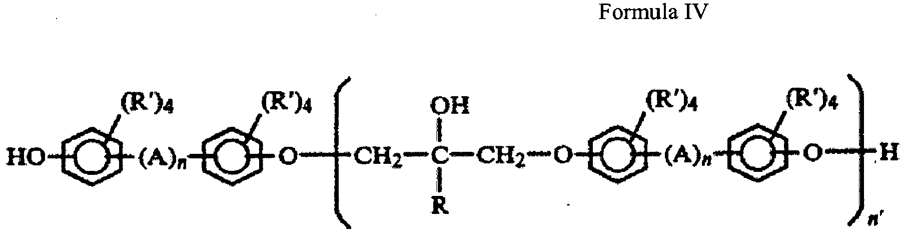

11. The composition of claim 2, wherein the at least one aromatic diol comprises a bisphenol compound.

12. The composition of claim 11, wherein the bisphenol compound comprises bisphenol A, a substituted bisphenol A, bisphenol F, a substituted bisphenol F, bisphenol S, a substituted bisphenol S, bisphenol K, a substituted bisphenol K, phenolphthalein, a substituted phenolphthalein, or mixtures thereof.

13. The composition of claim 1, wherein the elongation to break at 21 °C of the advancement reaction product is from 5 percent to 2000 percent as measured by the method ASTM D1708.

14. The composition of claim 1, wherein the tensile toughness at 21 °C of the advancement reaction product is from 0.05 MPa to 500 MPa as measured by the method ASTM D1708.

15. The composition of any one of claims 2-14, wherein the advancement reaction product is made water-dispersible by (i) reacting the advancement reaction product with a water-dispersible acrylic; (ii) reacting the advancement reaction product with a water-dispersible polyester resin; (iii) grafting with at least one acid monomer which contain a double bond which is polymerizable by free radical mechanism; (iv) grafting with at least one acid monomer which contain a double bond which is polymerizable by free radical mechanism and a vinylic monomer not containing an acid group; (iv) reacting the advancement reaction product with a phosphoric and water, or (v) at least partially neutralizing the reaction product of (i) to (iv) with a base.

16. A curable composition comprising (a) the composition of claim 1; and (b) at least one curing agent.

17. A cured resin prepared from the curable composition of claim 16.

18. A process for preparing the composition of claim 1 comprising preparing an advancement reaction product by reacting (a) at least one cycloaliphatic diglycidyl ether compound, and (b) at least one aromatic diol.

## Patentansprüche

1. Zusammensetzung umfassend ein Aufbaureaktionsprodukt mit der folgenden chemischen Struktur: 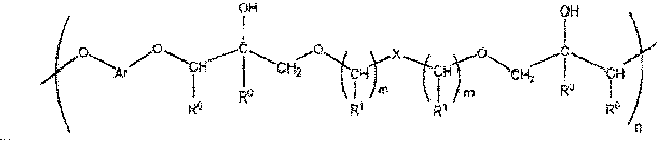 wobei n eine Zahl von 1 bis etwa 3000 ist, jedes m unabhängig einen Wert von 0 oder 1 besitzt, jedes R⁰ unabhängig -H oder -CH₃ ist, jedes R¹ unabhängig -H oder ein C₁ bis C₆-Alkylenradikal (gesättigtes divalentes aliphatisches Kohlenwasserstoffradikal), Ar eine divalente Arylgruppe oder eine Heteroarylengruppe ist und X eine Cycloalkylengruppe, beinhaltend eine substituierte Cycloalkylengruppe ist, wobei die Substitutionsgruppe ein Alkyl, Cyclo-alkyl, eine Aryl- oder eine Aralkylgruppe oder eine andere Substitutionsgruppe beinhaltet, beispielsweise ein Halogen, ein Nitro, ein geblocktes Isocyanat, eine Alkyloxidgruppe, die Kombination aus Cycloalkylen - und Alkylengruppen und die Kombination aus Alkylen und Cycloalkylengruppen mit einer Brückeneinheit dazwischen ist, und wobei das gewichtsmittlere Molekulargewicht des Aufbaureaktionsprodukts zwischen 5.000 und 1.000.000 liegt.

2. Zusammensetzung nach Anspruch 1, wobei das Aufbaureaktionsprodukt ein Reaktionsprodukt von (a) zumindest einer cycloaliphatischen Diglycidyletherverbindung und (b) zumindest einem aromatischen Diol umfasst.

3. Zusammensetzung nach Anspruch 2, die zumindest eine cycloaliphatische Diglycidyletherverbindung einen Diglycidylether von Cyclohexandimethanol umfasst.

4. Zusammensetzung nach Anspruch 2, wobei die zumindest eine cycloaliphatische Diglycidyletherverbindung einen Diglycidylether von cis-1,3-Cyclohexandimethanol und/oder einen Diglycidylether von trans-1,3- Cyclohexandimethanol umfasst.

5. Zusammensetzung nach Anspruch 2, wobei die zumindest eine cycloaliphatische Diglycidyletherverbindung einen Diglycidylether von cis-1,4 Cyclohexandimethanol und/oder einen Diglycidylether von trans-1,4 Cyclohexandimethanol umfasst.

6. Zusammensetzung nach Anspruch 2, wobei die zumindest eine cycloaliphatische Diglycidyletherverbindung einen Diglycidylether von cis-1,3-Cyclohexandimethanol, einen Diglycidylether von trans-1,4- Cyclohexandimethanol und/oder einen Diglycidylether von trans-1,4- Cyclohexandimethanol umfasst.

7. Zusammensetzung nach Anspruch 2, wobei die zumindest eine cycloaliphatische Diglycidyletherverbindung einen Diglycidylether von 1,1- Cyclohexandimethanol umfasst.

8. Zusammensetzung nach Anspruch 2, wobei das zumindest eine aromatische Diol eine Zusammensetzung mit der folgenden chemischen Struktur umfasst: 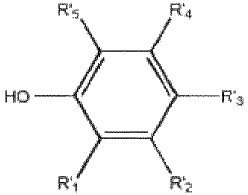 wobei eines und nur eines von R'₁ bis R'₅ eine Hydroxylgruppe ist; die verbleibenden vier Substituenten unter R'₁ bis R'₅ unabhängig Wasserstoff, ein Alkyl, ein Cycloalkyl, ein Aryl oder eine Aralkylgruppe oder ein anderer Substituent sind, zum Beispiel ein Halogen, Nitro, geblocktes Isocyanat, oder eine Alkyloxidgruppe; zusätzlich beliebige zwei der verbleibenden R'₁ bis R'₅ Gruppen einen verbundenen aliphatischen oder aromatischen Ring bilden können.

9. Zusammensetzung nach Anspruch 8, wobei das zumindest eine aromatische Diol ein Catechol, Resorzinol, ein substituiertes Resorzinol, ein Hydroquinon, ein substituiertes Hydroquinon und Mischungen davon umfasst.

10. Zusammensetzung nach Anspruch 2, wobei das zumindest eine aromatische Diol eine Verbindung mit der folgenden chemischen Struktur, Formel III oder Formel IV, umfasst:

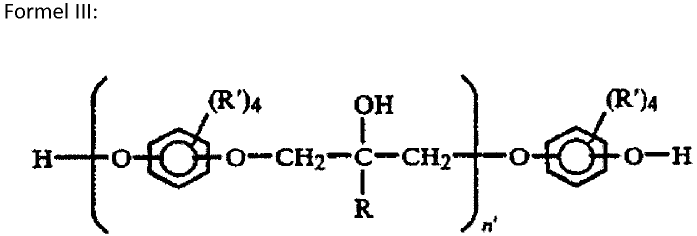

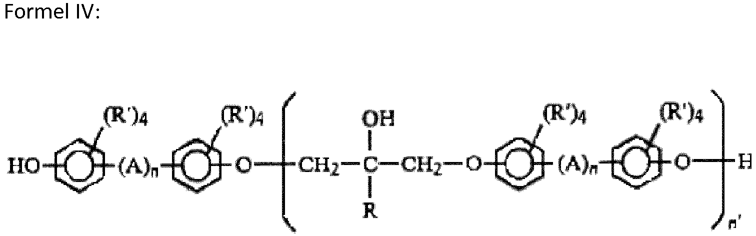

11. Zusammensetzung nach Anspruch 2, wobei das zumindest eine aromatische Diol eine Bisphenolverbindung umfasst.

12. Zusammensetzung nach Anspruch 11, wobei die Bisphenolverbindung Bisphenol A, ein substituiertes Bisphenol A, Bisphenol F, ein substituiertes Bisphenol F, Bisphenol S, ein substituiertes Bisphenol S, Bisphenol K, ein substituiertes Bisphenol K, Phenolphtalein, ein substituiertes Phenolphtalein, und Mischungen davon umfasst.

13. Zusammensetzung nach Anspruch 1, wobei die Verlängerung zum Bruch bei 21°C des Aufbaureaktionsprodukts bei 5 bis 2000 % liegt, wie mit dem ASTM D1708 Verfahren gemessen.

14. Zusammensetzung nach Anspruch 1, wobei die Zugfestigkeit des Aufbaureaktionsprodukts bei 21°C bei 0,05 MPa bis 500 Mpa liegt, wie mit dem ASTM D1708 Verfahren gemessen.

15. Zusammensetzung nach einem der Ansprüche 2-14, wobei das Aufbaureaktionsprodukt wasserdispergierbar gemacht wird durch (i) Umsetzen des Aufbaureaktionsprodukts mit einem wasserdispergierbaren Acryl, (ii) Umsetzen des Aufbaureaktionsprodukts mit einem wasserdispergierbaren Polyesterharz; (iii) Veredeln mit zumindest einem Säuremonomer enthaltend eine Doppelbindung, das polymerisierbar ist durch einen freie-Radikale-Mechanismus; (iv) Veredeln mit zumindest einem Säuremonomer enthaltend eine Doppelbindung, das polymerisierbar ist durch einen freie-Radikale-Mechanismus und einem Vinylmonomer, das keine Säuregruppe enthält; (iv) Umsetzen des Aufbaureaktionsprodukts mit einem Phosphor und Wasser, oder (v) zumindest teilweises Neutralisieren des Reaktionsprodukts von (i) zu (iv) mit einer Base.

16. Härtbare Zusammensetzung umfassend (a) die Zusammensetzung nach Anspruch 1; und (b) zumindest ein Härtungsmittel.

17. Gehärtetes Harz, hergestellt aus der härtbaren Zusammensetzung nach Anspruch 16.

18. Verfahren zum Herstellen der Zusammensetzung nach Anspruch 1, umfassend das Herstellen eines Aufbaureaktionsprodukts durch Umsetzen von (a) zumindest einer cycloaliphatischen Diglycidyletherverbindung und (b) zumindest einem aromatischen Diol.

## Revendications

1. Composition comprenant un produit de réaction d'avancement ayant la structure chimique suivante : 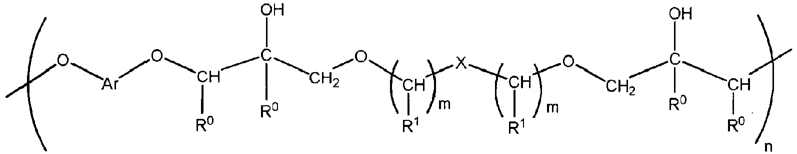 où n est un nombre de 1 à environ 3000 ; chaque m a indépendamment une valeur de 0 ou 1 ; chaque R⁰ représente indépendamment -H ou -CH₃ ; chaque R¹ représente indépendamment -H ou un radical alkylène en C₁ à C₆ (radical hydrocarboné aliphatique divalent saturé), Ar représente un groupe hétéroarylène ou groupe aryle divalent ; et X est un groupe cycloalkylène, comprenant un groupe cycloalkylène substitué, où le groupe substituent comprend un groupe alkyle, cycloalkyle, aryle ou aralkyle ou autre groupe substituant, par exemple, un halogène, un nitro ou un isocyanate bloqué, un groupe alkyloxy ; la combinaison de groupes cycloalkylène et alkylène et la combinaison de groupe alkylène et cycloalkylène avec un radical formant un pont entre eux et dans laquelle la masse moléculaire moyenne en poids du produit de réaction d'avancement va de 5 000 à 1 000 000.

2. Composition selon la revendication 1, dans laquelle le produit de réaction d'avancement comprend un produit de réaction de (a) au moins un composé d'éther de diglycidyle cycloaliphatique, et (b) au moins un diol aromatique.

3. Composition selon la revendication 2, dans laquelle l'au moins un composé d'éther de diglycidyle cycloaliphatique comprend un éther de diglycidyle de cyclohexanediméthanol.

4. Composition selon la revendication 2, dans laquelle l'au moins un composé d'éther de diglycidyle cycloaliphatique comprend un éther de diglycidyle de cis-1,3-cyclohexanediméthanol et/ou un éther de diglycidyle de trans-1,3-cyclohexanediméthanol.

5. Composition selon la revendication 2, dans laquelle l'au moins un composé d'éther de diglycidyle cycloaliphatique comprend un éther de diglycidyle de cis-1,4-cyclohexanediméthanol et/ou un éther de diglycidyle de trans-1,4-cyclohexanediméthanol.

6. Composition selon la revendication 2, dans laquelle l'au moins un composé d'éther de diglycidyle cycloaliphatique comprend un éther de diglycidyle de cis-1,3-cyclohexanediméthanol, un éther de diglycidyle de trans-1,3-cyclohexanediméthanol, un éther de diglycidyle de cis-1,4-cyclohexanediméthanol et/ou un éther de diglycidyle de trans-1,4-cyclohexanediméthanol.

7. Composition selon la revendication 2, dans laquelle l'au moins un composé d'éther de diglycidyle cycloaliphatique comprend un éther de diglycidyle de 1,1-cyclohexanediméthanol.

8. Composition selon la revendication 2, dans laquelle l'au moins un diol aromatique comprend un composé ayant la structure chimique suivante : 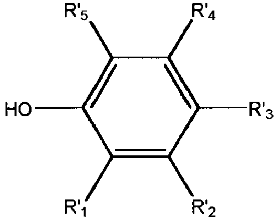 où un et un seul de R₁-R'₅ représente un groupe hydroxyle ; les quatre autres substituants parmi R'₁-R'₅ représentent indépendamment de l'hydrogène, un groupe alkyle, cycloalkyle, aryle ou aralkyle ou d'autres substituants, par exemple, un halogène, un nitro, un isocyanate bloqué ou un groupe alkyloxy ; de plus, deux quelconques de ces groupes R'₁-R'₅ restants peuvent former un cycle aliphatique ou aromatique fusionné indépendamment.

9. Composition selon la revendication 8, dans laquelle l'au moins un diol aromatique comprend du catéchol, un catéchol substitué, du résorcinol, un résorcinol substitué, de l'hydroquinone, une hydroquinone substituée, ou des mélanges de ceux-ci.

10. Composition selon la revendication 2, dans laquelle l'au moins un diol aromatique comprend un composé ayant la formule III ou formule IV de structure chimique suivante :

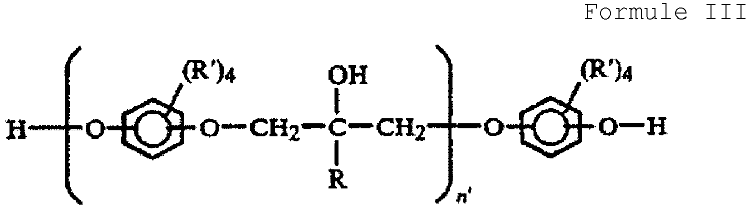

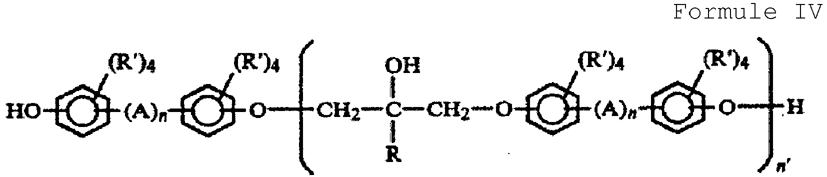

11. Composition selon la revendication 2, dans laquelle l'au moins un diol aromatique comprend un composé de bisphénol.

12. Composition selon la revendication 11, dans laquelle le composé de bisphénol comprend du bisphénol A, un bisphénol A substitué, du bisphénol F, un bisphénol F substitué, du bisphénol S, un bisphénol S substitué, du bisphénol K, un bisphénol K substitué, de la phénolphtaléine, une phénolphtaléine substituée, ou des mélanges de ceux-ci.

13. Composition selon la revendication 1, dans laquelle l'allongement à la rupture à 21 °C du produit de réaction d'avancement va de 5 pour cent à 2 000 pour cent, mesuré par la méthode ASTM D1708.

14. Composition selon la revendication 1, dans laquelle la résistance à la traction à 21 °C du produit de réaction d'avancement va de 0,05 MPa à 500 MPa, mesurée par la méthode ASTM D1708.

15. Composition selon l'une quelconque des revendications 2 à 14, dans laquelle le produit de réaction d'avancement est rendu dispersable dans l'eau en (i) faisant réagir le produit de réaction d'avancement avec un acrylique dispersable dans l'eau ; (ii) faisant réagir le produit de réaction d'avancement avec une résine de polyester dispersable dans l'eau ; (iii) greffant avec au moins un monomère d'acide qui contient une double liaison qui peut être polymérisée par un mécanisme à radicaux libres ; (iv) greffant avec au moins un monomère d'acide qui contient une double liaison qui peut être polymérisée par un mécanisme à radicaux libres et un monomère vinylique ne contenant pas de groupe acide ; (iv) faisant réagir le produit de réaction d'avancement avec un agent phosphorique et de l'eau, ou (v) neutralisant au moins partiellement le produit de réaction de (i) à (iv) avec une base.

16. Composition durcissable comprenant (a) la composition selon la revendication 1 ; et (b) au moins un agent de durcissement.

17. Résine durcie préparée à partir de la composition durcissable selon la revendication 16.

18. Procédé de préparation de la composition selon la revendication 1 comprenant la préparation d'un produit de réaction d'avancement en faisant réagir (a) au moins un composé d'éther de diglycidyle cycloaliphatique, et (b) au moins un diol aromatique.
